# EUROPÄISCHE PATENTSCHRIFT

(11) **EP 1 867 421 B1**
(45) Veröffentlichungstag und Bekanntmachung des Hinweises auf die Patenterteilung: **03.02.2016**
(21) Anmeldenummer: 07006500.8
(22) Anmeldetag: 29.03.2007
(51) Int. Cl.: B23G 5/06, B23G 7/02, B23G 5/18

(54) **Verfahren zur Erzeugung eines Gewindes in wenigstens zwei Arbeitsschritten**
Method for creating a thread in at least two work steps
Procédé destinés à la production d'un filetage en au moins deux étapes de travail

(30) Priorität: 13.06.2006 DE 102006027611
(43) Veröffentlichungstag der Anmeldung: 19.12.2007
(73) Patentinhaber: EMUGE-Werk Richard Glimpel GmbH & Co.KG Fabrik für Präzisionswerkzeuge, 91207 Lauf (DE)
(72) Erfinder: Glimpel, Helmut, 91207 Lauf (DE); Hechtle, Dietmar, 91257 Pegnitz (DE)
(74) Vertreter: Schröer, Gernot H.

(56) Entgegenhaltungen:
- EP-A- 1 616 652
- DE-A1-102005 019 921
- DE-A1-102005 022 503
- FR-A1- 2 611 154

## Beschreibung

Die Erfindung betrifft ein Verfahren nach dem Oberbegriff des Anspruchs 1 zur Erzeugung eines Gewindes in wenigstens zwei Arbeitsschritten. Ein solches Verfahren ist aus Dokument DE 10 2005 022503 A bekannt.

Zur Gewindeerzeugung oder Gewindenachbearbeitung sind ausschließlich spanabhebend, ausschließlich spanlos und sowohl spanabhebend als auch spanlos arbeitende Verfahren und Gewindewerkzeuge bekannt. Spanabhebende Gewindeerzeugung beruht auf Abtrag des Materials des Werkstücks im Bereich des Gewindeganges (oder: Gewindeprofils). Spanlose Gewindeerzeugung beruht auf einer Erzeugung des Gewindeganges in dem Werkstück durch Druck und die dadurch bewirkte Umformung oder plastische Verformung des Werkstücks. Ein Vorteil der spanlosen Gewindeerzeugung im Vergleich zu spanabhebender Gewindeerzeugung ist, dass durch die Verfestigung oder Verdichtung an der Oberfläche die Härte des Werkstoffs im Bereich des Gewindeprofils ansteigt und somit ein verschleißfesteres Gewinde erzeugt werden kann. Unter die spanabhebenden oder spanenden Gewindeerzeugung fallen die Gewindebohrer (vgl. Handbuch der Gewindetechnik und Frästechnik, Herausgeber: EMUGE-FRANKEN, Verlag: Publicis Corporate Publishing, Erscheinungsjahr: 2004 (ISBN 3-89578-232-7*),* im Folgenden nur als "EMUGE-Handbuch" bezeichnet, Kapitel 8, Seiten 181 bis 298) und die Gewindefräser (vgl. EMUGE-Handbuch, Kapitel 10, Seiten 325 bis 372).

Ein Gewindebohrer ist ein axial zu seiner Werkzeugachse arbeitendes Gewindeschneidwerkzeug, dessen Schneiden entlang eines Außengewindes mit der Gewindesteigung des zu erzeugenden Gewindes angeordnet sind. Beim Erzeugen des Gewindes wird der Gewindebohrer mit axialem Vorschub und unter Drehung um seine Werkzeugachse mit von der Vorschubgeschwindigkeit abhängiger Drehgeschwindigkeit in eine Bohrung des Werkstücks bewegt, wobei seine Schneiden permanent mit dem Werkstück an der Wandung der Bohrung in Eingriff sind (kontinuierlicher Schnitt).

Beim Gewindefräser sind mehrere Fräszähne mit Frässchneiden entlang des Werkzeugumfangs und/oder axial zur Werkzeugachse versetzt angeordnet. Zum Erzeugen des Gewindes wird der Gewindefräser um seine eigene Werkzeugachse rotiert und mit seiner Werkzeugachse in einer linearen Vorschubbewegung einerseits und zusätzlich einer Zirkularbewegung um eine Mittelachse des zu erzeugenden Gewindes oder der Vorbohrung im Werkstück andererseits bewegt, wodurch sich eine schraubenförmige Bewegung des Werkzeugs ergibt, deren Steigung der Gewindesteigung des zu erzeugenden Gewindes entspricht. Die Frässchneiden des Gewindefräsers greifen intermittierend nacheinander in das Werkstück ein (unterbrochener Schnitt).

Unter die spanlosen Gewindeerzeugungswerkzeuge fallen die sogenannten Gewindefurcher (vgl. EMUGE-Handbuch, Kapitel 9, Seiten 299 bis 324) sowie die sogenannten Zirkulargewindeformer.

Gewindefurcher weisen an einem Werkzeugschaft ein Außenprofil auf, das die Werkzeugachse spiral- oder schraubenförmig mit der Steigung des zu erzeugenden Gewindes umläuft und einen annähernd polygonalen Querschnitt aufweist. Die im Allgemeinen abgerundeten Polygon-Eckbereiche bilden Drückstollen oder Furchzähne oder Formkeile, die das Gewinde durch plastische Verformung und Fließen des Werkstückmaterials in die Zwischenräume zwischen dem Außenprofil einerseits und Verdichtung des Werkstückmaterials andererseits in das Werkstück eindrücken. Zur Erzeugung eines Innengewindes in einer bereits vorhandenen Bohrung wird der Gewindefurcher mit einer linearen Vorschubbewegung axial zur Werkzeugachse und unter Drehung des Werkzeugs um diese Werkzeugachse in die Bohrung eingeführt. Bekannte Ausführungsbeispiele solcher (axialen) Gewindefurcher finden sich auch in DE 101 36 293 A1, DE 199 58 827 A1, oder auch in DE 39 34 621 C2*.*

Aus WO 02/094491 A1 sind ein Zirkulargewindeformer und ein Zirkularformverfahren zur spanlosen Gewindeerzeugung bekannt. Dieser bekannte Zirkulargewindeformer ist langgestreckt und umfasst einen Arbeitsbereich mit einem oder mehreren durch Ringnuten voneinander getrennten ringförmigen Umfangsprofilen(en) mit jeweils wenigstens drei Drückstollen nach Art eines Polygons. Dieses Werkzeug wird in eine Bohrung mit größerem Durchmesser als das Werkzeug eingeführt und vollführt, neben einer Drehung um die eigene Werkzeugachse, eine kreisförmige Bewegung entlang des Umfangs der Bohrung sowie zugleich eine lineare Vorschubbewegung in die Bohrung und formt dadurch in einer schraubenförmigen Bewegung spanlos das Gewinde in der Bohrung. Ein weiterer Zirkularformer und ein weiteres Zirkularformverfahren sind aus DE 103 18 203 A1 bekannt.

Schließlich sind auch kombinierte Verfahren mit wenigstens zwei Arbeitsschritten zum Erzeugen von Innengewinden bekannt, bei denen in einem Arbeitsschritt ein Vorgewinde erzeugt wird und in einem weiteren Arbeitsschritt aus dem Vorgewinde das Innengewinde durch Formen fertiggestellt wird. Durch dieses zwei- oder mehrstufige Verfahren muss nicht das gesamte Volumen des Gewindeprofils von einem einzigen Formwerkzeug durch plastisches Verformen des Materials erzeugt werden und die Belastung und der Verschleiß des Formwerkzeuges werden reduziert. Durch die Kombination spanabhebender und umformender Fertigungsschritte können Vorteile bei groben Gewindesteigungen, schlecht fließenden Werkstoffen, der Verfestigung von Gewindebereichen und der Glättung von Gewindeoberflächen erreicht werden.

Für ein solches kombiniertes Verfahren mit mehreren Arbeitsschritten kann in einer ersten Variante in jedem Arbeitsschritt ein gesondertes Werkzeug verwendet werden. Aus DE 10 2004 033 772 A1 ist ein solches Verfahren bekannt, bei dem in einem ersten Arbeitsschritt im Werkstück ein Vorgewinde spanend oder spanlos vorerzeugt wird mittels eines Gewindebohrers, Gewindefräsers, durch Drehen, Schleifen oder Wickeln oder auch mittels eines Gewindefurchers und in einem zweiten Arbeitsschritt die Fertigerzeugung des Vorgewindes spanlos erfolgt unter Verwendung eines Gewindefurchers oder Zirkularformers, dessen Formkeile in den Gewindegrund des Vorgewindes eindrücken. Die Formkeile werden dabei durch Verbreiterungen ihrer Flanken im vorerzeugten Gewinde zentriert. Die Gewindeflanken des im ersten Arbeitsschritt erzeugten Vorgewindes bleiben im zweiten Arbeitsschritt unverändert, da die Verbreiterungen der Formkeilflanken nur an den Vorgewindeflanken zur Zentrierung anliegen, diese jedoch nicht verformen. Im zweiten Arbeitsschritt wird das Werkstückmaterial lediglich im Bereich des die beiden Gewindeflanken verbindenden Gewindegrundes des Vorgewindes weiter verformt. Dadurch werden im zweiten Arbeitsschritt der gesamte Gewindegrund und auch noch sich unmittelbar an den Gewindegrund anschließenden und in Verlängerung der Gewindeflanken des Vorgewinde liegenden Bereiche der Gewindeflanken des Endgewindes durch Formen fertiggestellt und sind dadurch zusätzlich verdichtet und verfestigt, während der überwiegende Bereich der Gewindeflanken des Endgewindes bereits im ersten Arbeitsschritt vollständig erzeugt wurde und im zweiten Arbeitsschritt nicht weiter bearbeitet wurde.

In einer zweiten bekannten Variante eines kombinierten Verfahrens mit mehreren Arbeitsschritten wird ein Kombinationswerkzeug mit einem spanabhebenden Gewindebohrteil und einem axial zur Werkzeugachse zum Gewindebohrteil versetzten spanlos arbeitenden Gewindefurchteil an einem Werkzeugschaft verwendet, wobei unter Drehung um die Werkzeugachse und axialem Vorschub in einem ersten Arbeitsschritt der Gewindebohrteil ein Vorgewinde in das Werkstück schneidet und in einem zweiten Arbeitsschritt der nachfolgende Gewindefurchteil das Vorgewinde in vorgegebener Weise zum endgültigen Gewinde umformt. Es schneidet also der Gewindebohrer das Gewinde vor und der Gewindefurcher furcht das vorgeschnittene Gewinde teilweise nach. Ein solches axiales Kombinationswerkzeug und Verfahren sind aus DE 70 17 590 U und DE 196 49 190 C2 bekannt.

Gemäß DE 196 49 190 C2 wird das Gewinde zunächst mit dem Gewindebohrer des Kombinationswerkzeuges in den Gewindeflanken profil- und maßgenau spanabhebend erzeugt und anschließend nur der Gewindegrund dieses vorgeschnittenen Gewindes mit dem unmittelbar nachfolgenden Gewindefurcher auf einen vorbestimmten Enddurchmesser spanlos verdichtet. Dadurch können vor allem die ersten Gewindegänge im Anschluss an einen Gewindeanschnitt schwingungsfester und weniger bruchgefährdet erzeugt werden. Im zweiten Arbeitschritt bleiben die beiden vom Gewindebohrer im ersten Arbeitsschritt geschnittenen Gewindeflanken vollständig unverändert. Das Werkstückmaterial am Gewindegrund wird nicht zum Fließen gebracht, sondern erst geschnitten und dann nur verdichtet.

Aus DE 70 17 590 U1 ist ein Kombinationswerkzeug zum Herstellen von Innengewinden bekannt mit einem als Vor- bzw. Mittelschneider ausgebildeten Gewindeschneidbohrer als vorderes Werkzeugteil zum Vorschneiden des Gewindes und einem sich in Arbeitsrichtung anschließenden Gewindefurcher als hinteres Werkzeugteil zum Fertigbearbeiten des Gewindes.

Der Erfindung liegt nun die Aufgabe zugrunde, ein neues Verfahren zur Erzeugung eines Gewindes in wenigstens zwei Arbeitsschritten anzugeben.

Diese Aufgabe wird gemäß der Erfindung gelöst mit den Merkmalen des Patentanspruchs 1.

Das Verfahren zum Erzeugen eines Gewindes in einem Werkstück gemäß Patentanspruch 1 umfasst die folgenden Verfahrensschritte:
a) Erzeugen eines Vorgewindes mit einem Vorgewindeprofil mit zwei Vorgewindeflanken und einem die beiden Vorgewindeflanken verbindenden Vorgewindegrund in dem Werkstück durch Abtragen von Material des Werkstücks (oder: spanabhebend, spanend) in wenigstens einem ersten Arbeitsschritt (oder: Prozessschritt)
b) Erzeugen eines Endgewinde mit einem Endgewindeprofil, das im Allgemeinen zwei Endgewindeflanken und einen die beiden Endgewindeflanken verbindenden Endgewindegrund aufweist, durch plastisches Eindrücken (oder: spanloses Formen oder Umformen) des Materials des Werkstücks wenigstens in einem Teilbereich des Vorgewindeprofils mittels wenigstens eines Gewindeformprofils, das zwei Flanken und einen die beiden Flanken verbindenden Grundbereich aufweist, um ein vorgegebenes oder vorgebbares Eindrückvolumen,
c) wobei wenigstens eine der Vorgewindeflanken wenigstens in einem Flankenteilbereich unter einem ersten Neigungswinkel (oder: Steigungswinkel) zu einer Mittelachse (oder: einer durch das Profil laufenden Referenzachse) des Vorgewindeprofils geneigt ist und wenigstens eine der Flanken des Gewindeformprofils wenigstens in einem Flankenteilbereich unter einem zweiten Neigungswinkel zu einer Mittelachse des Gewindeformprofils geneigt ist und
d) wobei der erste Neigungswinkel und der zweite Neigungswinkel verschieden voneinander sind.

Es wird also in wenigstens einem ersten Arbeitsschritt zunächst ein Vorgewinde in dem Werkstück spanabhebend oder durch Materialabtrag erzeugt und dann wird in wenigstens einem zweiten Arbeitsschritt, ohne Materialabtrag, nur durch plastisches Eindrücken eines Gewindeformwerkzeugs und die dadurch bewirkte bleibende Verformung des Werkstückmaterials, das Vorgewinde nachbearbeitet und in ein Endgewinde weitergeformt oder umgeformt. Es wird also, mit anderen Worten, beim plastischen Eindrücken zum Erzeugen des Endgewindes im zweiten Arbeitsschritt ein so hoher Druck auf die Werkstückoberfläche mittels des Werkzeugs ausgeübt, dass sich, über eine rein elastische Verformung hinaus, eine gezielte plastische Umformung des Werkstückmaterials im Gewindebereich ergibt, die wiederum zu einer Volumenvergrößerung im Endgewindeprofil gegenüber dem Vorgewindeprofil führt. Das plastische Eindrücken oder Umformen bewirkt eine Verfestigung des Gefüges im Werkstückmaterial an den betroffenen Gewindeprofilbereiche und in der Regel auch ein Fließen des Werkstückmaterials, wenn der ausgeübte Druck oberhalb der Fließgrenze des Werkstückmaterials liegt. Sowohl die Verfestigungsvorgänge als auch die Fließvorgänge führen für sich oder in Kombination zu der angestrebten Volumenverkleinerung des Werkstückmaterials und der komplementären Volumenvergrößerung des Gewindeprofils.

Die Erfindung beruht nun auf der neuen Überlegung, das Vorgewindeprofil und das Gewindeformprofil so aufeinander abzustimmen, dass, wenigstens in Teilbereichen, die Gewindeflanken des Vorgewindes einen anderen Steigungswinkel oder Neigungswinkel aufweisen als Gewindeflanken des Gewindeformprofils zum Nachformen des Vorgewindes.

Das Eindrückvolumen wird dabei vorzugsweise durch die Anpassung eines Gewindeformprofils oder eines Wirkprofils des Gewindeformwerkzeuges an das vorab erzeugte Vorgewindeprofil festgelegt und ergibt sich insbesondere als Differenzvolumen der jeweiligen Abmessungen von Vorgewindeprofil und Gewindeformprofil abzüglich eines eventuellen und in der Regel relativ kleinen Rückstellvolumens aufgrund elastischer Rückstellung des Werkstückmaterials.

Ein Gewindeprofil, sei es das Vorgewindeprofil, das Gewindeformprofil oder das Endgewindeprofil, ist dabei in der üblichen Weise als Kontur eines Querschnitts des Gewindeganges senkrecht zu dessen spiral- oder schraubenförmigen Verkauf oder Kontur eines Längsschnittes durch den Gewindegang in einer die Gewindemittelachse enthaltenden Schnittebene definiert.

Die Endgewindeflanken des Endgewindeprofils reichen somit wenigstens abschnittsweise weiter in das Werkstückmaterial als zuvor das Vorgewindeprofil oder das Endgewindeprofil ist zumindest in einem Teilbereich der Gewindeflanken um das beim Einformen verdrängte Volumen größer als das Vorgewindeprofil.

Das Vorgewindeprofil und/oder das Gewindeformprofil kann durch ein einziges Profil oder auch eine Überlagerung mehrerer einzelner Profile als resultierendes Wirkprofil erzeugt oder dargestellt werden.

Ein Werkzeug oder ein Werkzeugsatz zur Erzeugung von Gewinden in Werkstücken, mit dem das Verwahren gemäß der Erfindung durchgeführt werden kann, umfasst
a) wenigstens einen spanabhebend arbeitenden Gewindeschneidbereich mit einem Gewindeschneidprofil zum Erzeugen eines Vorgewindes dessen Vorgewindeprofil zwei Vorgewindeflanken und einen die beiden Vorgewindeflanken verbindenden Vorgewindegrund aufweist, und
b) wenigstens einen spanlos arbeitenden Gewindeformbereich mit einem Gewindeformprofil, das zwei Flanken und einen die beiden Flanken verbindenden Gewindegrundbereich aufweist, zum Nachformen des Vorgewindes durch plastisches Eindrücken des Materials des Werkstücks wenigstens in einem Teilbereich der Vorgewindeflanken um ein vorgegebenes oder vorgebbares Eindrückvolumen,
c) wobei der oder die Gewindeschneidbereich(e) und der bzw. die Gewindeformbereich(e) an einem gemeinsamen Werkzeug ausgebildet sind, und axial zur Werkzeugachse versetzt zueinander sind,
d) wobei wenigstens eine der Vorgewindeflanken wenigstens in einem Flankenteilbereich unter einem ersten Neigungswinkel zu einer Mittelachse geneigt ist und wenigstens eine der Flanken des Gewindeformprofils wenigstens in einem Flankenteilbereich unter einem zweiten Neigungswinkel zu einer Mittelachse geneigt ist und
e) wobei der erste Neigungswinkel und der zweite Neigungswinkel verschieden voneinander sind.

Das Erzeugen des Vorgewindeprofils und das Weiterformen des Vorgewindeprofils in das Endgewindeprofil in den beiden Arbeitsschritten können mit unterschiedlichen Werkzeugen oder auch mit einem gemeinsamen Kombinationswerkzeug erfolgen.

Das oder die Werkzeuge oder der oder die Werkzeugbereich(e) zum Erzeugen des Vorgewindes in dem ersten Arbeitsschritt kann bzw. können insbesondere einen Gewindebohrer und/oder einen Gewindefräser und das oder die Werkzeuge oder der oder die Werkzeugbereich(e) zum Fertigformen des Endgewindes in dem zweiten Arbeitsschritt kann bzw. können einen Gewindefurcher und/oder einen Zirkulargewindeformer umfassen.

Zum Einführen oder Einfädeln des nachfolgenden Gewindeformbereichs kann dieser einen Einführbereich oder ein Einführungsgewinde aufweisen mit einem dem Vorgewindeprofil angepassten Profil und/oder kann ein weicher Druckausgleich oder eine Minusprogrammierung bei Zugausgleich im Werkzeugspannmittel vorgesehen sein.

Ferner kann ein definierter Gewindeanfang des Vorgewindes im Werkstück und ein exaktes Einfädeln des nachfolgenden Gewindeformbereichs an diesem Gewindeanfang durch Drehpositionsbestimmung des oder der Werkzeuge(s) erzeugt werden.

Durch diese Kombination spanabhebender und umformender Fertigungsschritte können insbesondere
- Gewinde auch in schlecht fließenden oder umformbaren Werkstoffen, wie z.B. Grauguss, (teilweise oder in der Endbearbeirung) formend erzeugt werden,
- die Prozesskräfte reduziert werden,
- auch Gewinde mit großen Gewindesteigungen, insbesondere bis 6 mm, und/oder großen Bearbeitungsquerschnitten (in der Endbearbeitung) umformend erzeugt werden,
- eine sogenannte Krallenbildung trotz der umformenden Endbearbeitung vermieden oder reduziert werden und damit der Mutterkern oder Kerndurchmesser in engen Toleranzen gehalten werden,
- eine Verfestigung und Erhöhung der Dauerfestigkeit und dynamischen Festigkeit der Gewinde, zumindest von deren endgeformten Gewindebereichen erreicht werden,
- eine Glättung von Gewindeoberflächen, zumindest an den umgeformten Bereichen, erzielt werden.

Vorteilhafte Ausgestaltungen und Weiterbildungen gemäß der Erfindung ergeben sich aus den vom Anspruch 1 abhängigen Ansprüchen.

Mit dem Verfahren gemäß der Erfindung können zwei- oder mehrstufig alle gängigen Gewindetypen, einschließlich metrische Gewinde (z.B. nach DIN oder ISO), Rohrgewinde, US Unified Gewinde MJ-Gewinde, US UNJ-Gewinde, kegelige Gewinde, zylindrische Gewinde, Trapezgewinde, Rundgewinde, Sägengewinde, Whitworth-Gewinde und auch Sondergewinde wie Kugelumlaufgewinde oder Self-Lock-Gewinde hergestellt werden.

Die Erfindung wird nachfolgend anhand von Ausführungsbeispielen und unter Bezugnahme auf die Zeichnungen weiter erläutert. Es zeigen jeweils in einem Längsschnitt:
- FIG 1: eine erste Ausführungsform eines geschnittenen Vorgewindeprofils und eines Gewindenachformprofils,
- FIG 2: die Überlagerung der beiden Gewindeprofile gemäß FIG 1 und das daraus resultierende Endgewindeprofil,
- FIG 3: eine zweite Ausführungsform eines geschnittenen Vorgewindeprofils und eines Gewindenachformprofils,
- FIG 4: die Überlagerung der beiden Profile gemäß FIG 3 und das daraus resultierende Endgewindeprofil,
- FIG 5: eine dritte Ausführungsform eines geschnittenen Vorgewindeprofils und eines Gewindenachformprofils,
- FIG 6: die Überlagerung der beiden Profile gemäß FIG 5 und das daraus resultierende Endgewindeprofil,
- FIG 7: eine vierte Ausführungsform eines geschnittenen Vorgewindeprofils und eines Gewindenachformprofils,
- FIG 8: die Überlagerung der beiden Profile gemäß FIG 7 und das daraus resultierende Endgewindeprofil,
- FIG 9: eine fünfte Ausführungsform eines geschnittenen Vorgewindeprofils und eines Gewindenachformprofils,
- FIG 10: die Überlagerung der beiden Profile gemäß FIG 9 und das daraus resultierende Endgewindeprofil,
- FIG 11: eine fünfte Ausführungsform eines geschnittenen Vorgewindeprofils und eines Gewindenachformprofils,
- FIG 12: die Überlagerung der beiden Profile gemäß FIG 11 und das daraus resultierende Endgewindeprofil,
- FIG 13: eine sechste Ausführungsform eines geschnittenen Vorgewindeprofils und eines Gewindenachformprofils,
- FIG 14: die Überlagerung der beiden Profile gemäß FIG 13 und das daraus resultierende Endgewindeprofil,
- FIG 15: eine siebte Ausführungsform eines geschnittenen Vorgewindeprofils und eines Gewindenachformprofils,
- FIG 16: die Überlagerung der beiden Profile gemäß FIG 15 und das daraus resultierende Endgewindeprofil,
- FIG 17: eine achte Ausführungsform eines geschnittenen Vorgewindeprofils und eines Gewindenachformprofils,
- FIG 18: die Überlagerung der beiden Profile gemäß FIG 17 und das daraus resultierende Endgewindeprofil,
- FIG 19: eine neunte Ausführungsform eines geschnittenen Vorgewindeprofils und eines Gewindenachformprofils,
- FIG 20: die Überlagerung der beiden Profile gemäß FIG 19 und das daraus resultierende Endgewindeprofil,
- FIG 21: eine zehnte Ausführungsform eines geschnittenen Vorgewindeprofils und eines Gewindenachformprofils,
- FIG 22: die Überlagerung der beiden Profile gemäß FIG 21 und das daraus resultierende Endgewindeprofil,
- FIG 23: eine elfte Ausführungsform eines geschnittenen Vorgewindeprofils und eines Gewindenachformprofils,
- FIG 24: die Überlagerung der beiden Profile gemäß FIG 23 und das daraus resultierende Endgewindeprofil,
- FIG 25: eine zwölfte Ausführungsform eines geschnittenen Vorgewindeprofils und eines Gewindenachformprofils,
- FIG 26: die Überlagerung der beiden Profile gemäß FIG 25 und das daraus resultierende Endgewindeprofil,
- FIG 27: eine dreizehnte Ausführungsform eines geschnittenen Vorgewindeprofils und eines Gewindenachformprofils,
- FIG 28: die Überlagerung der beiden Profile gemäß FIG 27 und das daraus resultierende Endgewindeprofil,
- FIG 29: eine vierzehnte Ausführungsform eines geschnittenen Vorgewindeprofils und eines Gewindenachformprofils,
- FIG 30: die Überlagerung der beiden Profile gemäß FIG 29 und das daraus resultierende Endgewindeprofil,
- FIG 31: das Endgewindeprofil gemäß FIG 30 als Kugelumlaufgewinde,
- FIG 32 bis 37: verschiedene Momentaufnahmen eines Arbeitsprozesses zur Erzeugung eines Vorgewindes mit einem Zirkulargewindefräser

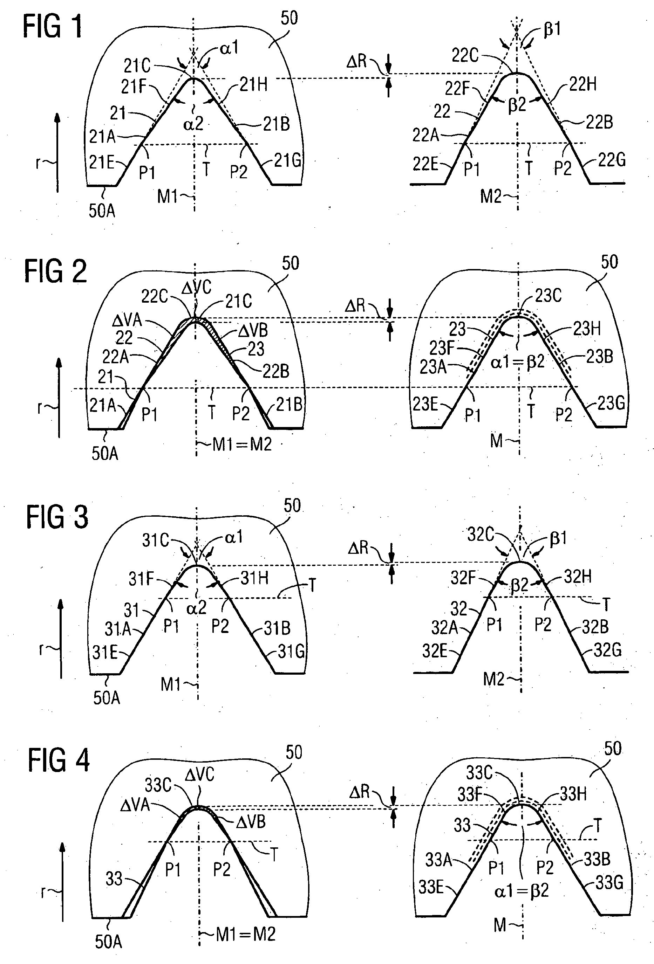

Einander entsprechende Teile und Größen sind in den FIG 1 bis 37 mit denselben Bezugszeichen versehen.

In dem Ausführungsbeispiel gemäß FIG 1 und 2 ist das bei einem ersten Arbeitsschritt des Verfahrens spanabhebend erzeugte oder geschnittene Vorgewindeprofil 21 ein Innengewinde an einer Oberfläche 50A des Werkstücks 50, die Innenfläche einer Bohrung ist. Beide Gewindeflanken 21A und 21B des Vorgewindeprofils 21 sind durch eine parallel zur Oberfläche 50A des Werkstücks 50 verlaufende strichlinierte Trennebene, deren Schnittpunkt mit der Flanke 21A mit P1 bezeichnet ist und deren Schnittpunkt mit der Flanke 21B mit P2 bezeichnet ist, in zwei lineare Teilflankenbereiche 21E und 21F bzw. 21G und 21H unterschiedlicher Steigung unterteilt. Die äußeren Teilflankenbereiche 21E und 21G der Gewindeflanken 21A und 21B, die von der Oberfläche 50A des Werkstücks 50 bis zu den jeweiligen Übergangspunkten P1 und P2 verlaufen, sind unter einem Öffnungswinkel α1 zueinander gerichtet oder schließen diesen Winkel α1 ein, während die anschließenden, von den Übergangspunkten P1 bzw. P2 zum Gewindegrund 21C verlaufenden inneren Teilflankenbereiche 21F und 21H der Gewindeflanken 21A und 21B unter einem größeren Winkel α2, d.h. α2 > α1, zueinander gerichtet sind. Der äußere Teilflankenbereich 21E und 21G schließt mit dem zugehörigen inneren Teilflankenbereich 21F und 21H an dem Übergangspunkt P1 bzw. P2 einen Winkel 180°-(α1 + α2)/2 ein und ist wegen der relativ weit außen liegenden Trennebene kürzer ausgebildet als der innere Teilflankenbereich 21F bzw. 21H. Das Vorgewindeprofil 21 weist eine Mittelachse M1 und ist in FIG 1 symmetrisch bezüglich dieser Mittelachse M1 ausgebildet. Der Gewindegrund 21C ist abgerundet, insbesondere kreisförmig ausgebildet.

Auf der rechten Seite der FIG 1 ist ein zugehöriges Gewindeformprofil 22 zum formenden Nachbearbeiten des Vorgewindeprofils 21 dargestellt. Auch bei dem Gewindeformprofil 22 sind die Flanken 22A und 22B an den durch die gleiche oder bei gleichem Radius r angeordnete Trennlinie T definierten Übergangspunkten P1 und P2 in zwei lineare Teilflankenbereiche 22E und 22F bzw. 22G und 22H unterteilt, wobei die äußeren Teilflankenbereiche 22E und 22G den Winkel β1 und die inneren Teilflankenbereiche 22F und 22H den Winkel β2 einschließen und β2 > β1 ist. Der äußere Teilflankenbereich 22 E und 22G schließt mit dem zugehörigen inneren Teilflankenbereich 22F und 22H an dem Übergangspunkt P1 bzw. P2 einen Winkel 180°-(β1 + β2)/2 ein. Das Gewindeformprofil 22 weist eine Mittelachse M2 und ist in FIG 1 symmetrisch bezüglich dieser Mittelachse M2 ausgebildet.

Der Gewindegrundbereich 22C des Gewindeformprofils 22 ist abgerundet und in seiner Länge (oder: Breite im Querschnitt) größer als der Gewindegrund 21C des Vorgewindeprofils 21. Bei dem Werkzeug ist der Gewindegrundbereich 22C der radial am weitesten außen liegende Außenbereich oder die Überlagerung der Zahnköpfe der Formzähne, bei dem komplementären, im Werkstück gebildeten Profil der Gewindegrund oder der tiefste Bereich im Werkstück. Der Gewindegrundbereich 22C des Gewindeformprofils 22 ist nun radial, d.h. in Richtung des Radius r, um eine radiale Differenz oder einen radialen Abstand ΔR weiter außen angeordnet oder weist eine entsprechende größere radiale Zustellung in das Werkstück auf als das Vorgewindeprofil 21.

Die Überlagerung der beiden Profile 21 und 22 in den aufeinanderfolgenden Verfahrensschritten, also zunächst spanendes Erzeugen des Vorgewindeprofils 21 und danach formendes Nachbearbeiten des Vorgewindeprofils 21 durch das Gewindeformprofil 22, ist auf der linken Seite der FIG 2 dargestellt und das sich ergebende Endgewindeprofil 23 auf der rechten Seite der FIG 2. Der Öffnungswinkel α1 der äußeren Teilflankenbereiche 21E und 21 G des Vorgewindeprofils 21 ist größer als der Öffnungswinkel β1 der äußeren Teilflankenbereiche 22E und 22G des Gewindeformprofils 22, d.h. α1 > β1, und der Öffnungswinkel α2 der inneren Teilflankenbereiche 21F und 21H des Vorgewindeprofils 21 ist größer als der Öffnungswinkel β2 der inneren Teilflankenbereiche 22F und 22H des Gewindeformprofils 22, d.h. α2 > β2. Die Mittelachsen M1 und M2 der beiden überlagerten Profile 21 und 22 werden in Deckung oder Übereinstimmung gebracht und die resultierende Mittelachse des Endgewindeprofils 23 ist mit M bezeichnet und fällt in FIG 2 mit den Mittelachsen M1 und M2 zusammen. Dadurch ist auch das Endgewindeprofil 23 symmetrisch bezüglich seiner Mittelachse M.

Durch Kaltverformung und Fließen des Material sowie Verfestigung wird mit dem Gewindeformprofil 22 an beiden Flanken jeweils eine Volumendifferenz oder ein Eindrückvolumen ΔVA und ΔVB weiter in das Werkstück 50 eingearbeitet. Das Eindrückvolumen ΔVA an der Flanke 21A und ΔVB an der Flanke 21B des Vorgewindeprofils 21 liegt zwischen den inneren Teilflankenbereichen 21F und 21H des Vorgewindeprofils 21 einerseits und 22F und 22H des Gewindeformprofils 22 andererseits und zusätzlich zwischen den Übergangspunkten P1 und P2 einerseits und dem Gewindegrund 21C andererseits und nimmt zwischen den Punkten P1 und P2 und dem Gewindegrund 21C oder 33C des Endgewindes 33 zum Gewindegrund 21 C oder 33C hin entsprechend dem Neigungsunterschied α2 - β2 der inneren Teilflankenbereiche zu. Der radiale Abstand ΔR von Gewindegrund 21C und Gewindegrundbereich 22C ist so gewählt, dass das am Gewindegrund 21C des Vorgewindes 21 eingedrückte Eindrückvolumen ΔVC bezogen auf die Eingriffslänge des Profils an das anschließende Eindrückvolumen ΔVA und ΔVB an den Flanken 21A und 21B angepasst ist.

Der Gewindegrund 23C und die angrenzenden inneren Teilflankenbereiche 23F und 23H des Endgewindeprofils 33 sind somit formend erzeugt, wobei aufgrund des zum Gewindegrund 33C hin zunehmenden Eindrückvolumens die Verdichtung am Gewindegrund 33C selbst am stärksten ist, angedeutet durch die doppelte gepunktete Linie, die die höhere Verfestigung (mehr Linien bedeuten mehr Verfestigung) darstellt

Im Ausführungsbeispiel gemäß FIG 3 und FIG 4 ist gegenüber dem Ausführungsbeispiel gemäß FIG 1 und 2 die gestrichelt dargestellte Trennlinie T mit den beiden Übergangs- oder Schnittpunkten P1 und P2 weiter nach innen zum Gewindegrund hin verlegt. Dadurch sind die beiden inneren Teilflankenbereiche 31F der Flanke 31A und 31H der Flanke 31B des Vorgewindeprofils 31 sowie entsprechend die beiden inneren Teilflankenbereiche 32F der Flanke 32A und 32H der Flanke 32B des Gewindeformprofils 32 kürzer als die entsprechenden äußeren Teilflankenbereiche 31E und 31G des Vorgewindeprofils 31 bzw. 32E und 32G des Gewindeformprofils 32. Außerdem ist der radiale Abstand ΔR zwischen den Gewindegrundbereichen 31C und 32C der Profile 31 und 32 etwas kleiner gewählt als in FIG 1 und 2.

Es ergibt sich somit zwischen den Punkten P1 und P2 und dem Gewindegrund 33C des Endgewindes 33 ein zum Gewindegrund 33C hin zunehmendes Eindrückvolumen ΔVA an der Flanke 33A und ΔVB an der Flanke 33B und zusätzlich ein dem radialen Abstand ΔR entsprechendes Eindrückvolumen ΔVC am Gewindegrund 33C selbst. Der Gewindegrund 33C und die angrenzenden Teilflankenbereiche 33F und 33H des Endgewindeprofils 33 sind somit formend erzeugt. Aufgrund des zum Gewindegrund 33C hin zunehmenden Eindrückvolumens ist die Verfestigung am Gewindegrund 33C selbst am stärksten, angedeutet durch die doppelte gepunktete Linie. Auch in FIG 3 und 4 ist α2 > β2 und α1 > β1 und sind die Profile 31, 32 und 33 symmetrisch bezüglich ihrer jeweiligen Mittelachsen M1, M2 bzw. M ausgebildet, die wieder zusammenfallen.

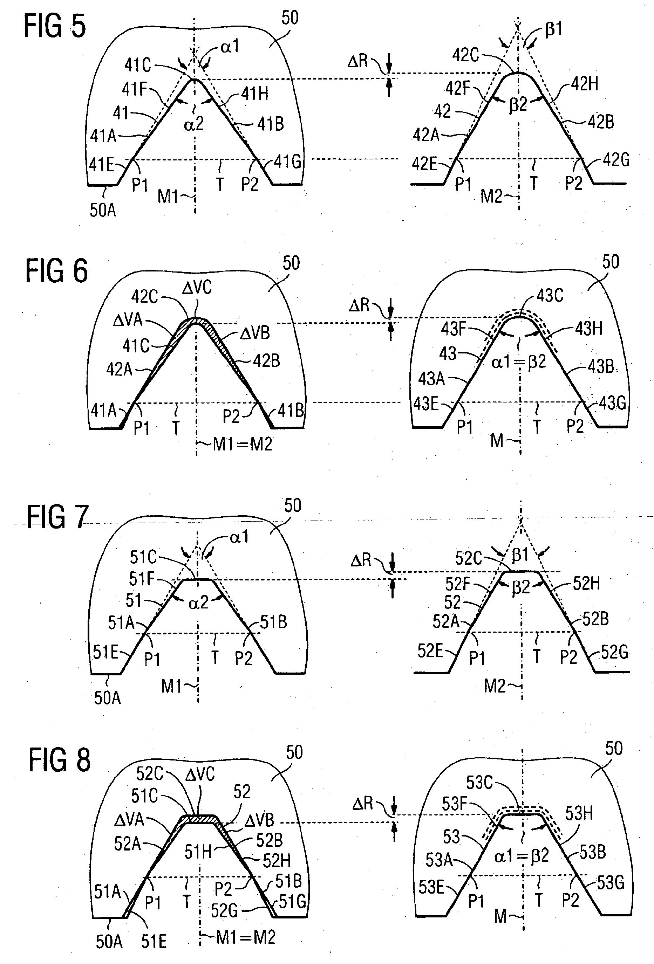

In dem Ausführungsbeispiel gemäß FIG 5 und FIG 6 ist die Trennlinie T gegenüber den FIG 1 bis 4 weiter nach außen gelegt und ergeben sich aufgrund der dadurch weiter außen liegenden Übergangspunkte P1 und P2 zwischen den Teilflankenbereichen 41E und 41F sowie 41G und 41H beim Vorgewindeprofil 41 sowie 42E und 42F sowie 42G und 42H beim Gewindeformprofil 42 größere Eindrückvolumina ΔVA und ΔVB an den Flanken 41A und 41B des Vorgewindeprofils 41. Der radiale Abstand ΔR und damit das am Gewindegrund 41C des Vorgewindes 41 eingedrückte Volumen ΔVC ist wieder bezogen auf die Eingriffslänge des Profils an das anschließende Eindrückvolumen ΔVA und ΔVB an den Flanken 41A und 41B angepasst. Die Eindrückvolumina ΔVA und ΔVB nehmen wieder nach innen zum Gewindegrund 43C des Endgewindes 43 hin zu, und zwar stärker als in FIG 1 bis 4, wodurch sich vor allem unteren innersten Bereich der Teilflankenbereiche 43F und 43H der Flanken 43A und 43B des Endgewindes 43 eine besonders hohe Verfestigung des Materialgefüges des Werkstücks ergibt, wieder angedeutet durch die nunmehr drei gestrichelten Linien im Werkstück 50.

In FIG 7 und 8 ist ein weiteres Ausführungsbeispiel gezeigt mit zwei unterschiedlich zueinander geneigten Teilflankenbereichen 51E und 51F der Flanke 51A des Vorgewindeprofils 51 und 51G und 51H der Flanke 51B des Vorgewindeprofils 51. Gemäß FIG 7 und FIG 8 sind die Gewindegrundbereiche 51C des Vorgewindeprofils 51 und 52C des Gewindeformprofils 52 jeweils abgeflacht, verlaufen also parallel zur Werkstückoberfläche 50A und gehen mit einem leichten Radius oder einer insbesondere kreisrunden Krümmung in die jeweiligen anschließenden Flanken 51A und 51B sowie 52A und 52B über.

Die Überlagerung der beiden Profile, nämlich des Vorgewindeprofils 51 und des Gewindeformprofils 52 ergibt gemäß FIG 8 ein trapezförmiges Endgewindeprofil 53 mit linearen Gewindeflanken 53A und 53B, die unter dem Winkel β2 = α1 zueinander gerichtet sind und durch einen geraden Gewindegrund 53C über gerundete Übergangsbereiche miteinander verbunden sind.

Aufgrund des gewählten radialen Abstands ΔR und der seitlichen Abmessungen an den Gewindeflanken 51A und 51B sowie 52A und 52B sowie deren Öffnungswinkel α1 und α2 sowie β1 und β2 für die Teilflankenbereiche 51E bis 51H und 52E bis 52H ergibt sich das in FIG 8 links gezeigte Eindrückvolumen ΔVA zwischen den Teilflankenbereichen 51 F und 52F sowie ΔVB zwischen den Teilflankenbereichen 51H und 52H und das gewindegrundseitige Eindrückvolumen ΔVC zwischen den Gewindegründen 51C und 52C. Das Eindrückvolumen nimmt wieder von außen nach innen zu, wodurch sich eine zunehmende Verfestigung am Gewindegrund 53C des Endgewindes 53 ergibt. Die ausschließlich geformten inneren Teilflankenbereiche des Endgewindeprofils 53 sind bei der Flanke 53A mit 53F und bei der Flanke 53B mit 53H bezeichnet und die ausschließlich geschnittenen äußeren Teilflankenbereiche der Flanke 53A mit 53D und der Flanke 53B mit 53G.

In allen Ausführungsformen gemäß FIG 1 bis FIG 8 ist nun vorzugsweise α1 = β2, so dass die ausschließlich geschnittenen äußeren Teilflankenbereiche 23E und 23G bzw. 33E und 33G bzw. 43E und 43G bzw. 53E und 53G des Endgewindeprofils 23 bzw. 33 bzw. 43 bzw. 53 jeweils in den Übergangspunkten P1 bzw. P2 in den sich anschließenden ausschließlich geformten inneren Teilflankenbereich 23F und. 23H bzw. 33F und 33H bzw. 43F und 43H bzw. 53F und 53H unter derselben Steigung oder stetig differenzierbar sich fortsetzt, also sich wieder eine lineare gerade Gesamtflanke 23A und 23B bzw. 33A und 33B bzw. 43A und 43B bzw. 53A und 53B des Endgewindeprofils 23, 33, 43 oder 53 ergibt.

Ferner liegen in allen Ausführungsformen gemäß FIG 1 bis 8 die Eindrückvolumina ΔVA und ΔVB zwischen den jeweiligen inneren Teilflankenbereichen von Vorgewindeprofil und Gewindeformprofil und, radial gesehen, zwischen den Übergangspunkten P1 und P2 und dem Gewindegrund. Die Zunahme der Eindrückvolumina ΔVA und ΔVB an den Flanken nach innen zum Gewindegrund ist durch die Winkeldifferenz α2 - β2 oder den Neigungsunterschied der inneren Teilflankenbereiche von Vorgewinde und Gewindeformprofil bestimmt.

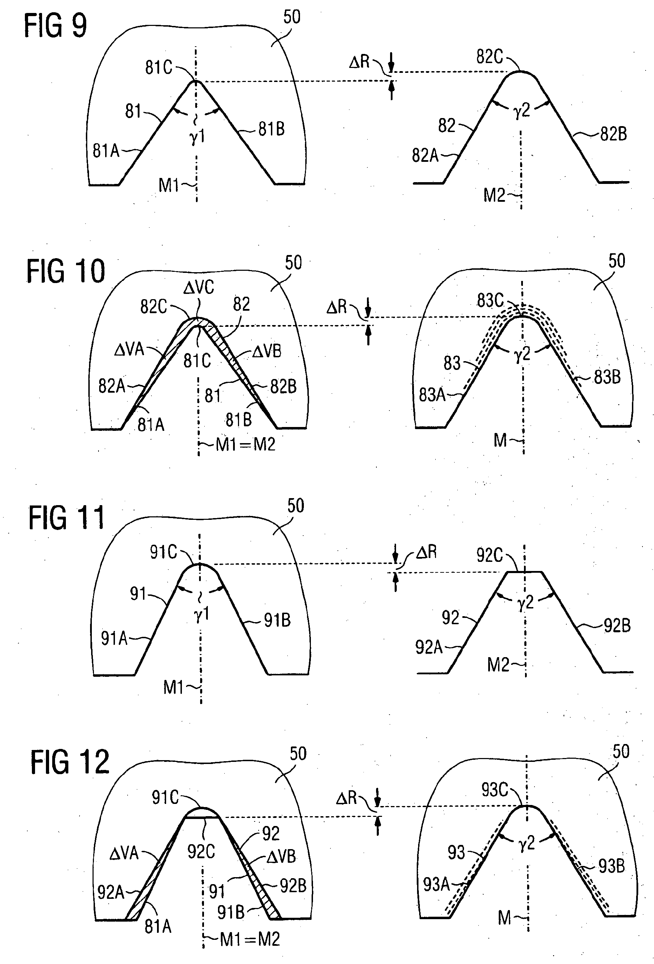

Die FIG 9 und 10 zeigen ein Ausführungsbeispiel, bei dem das Endgewindeprofil vollständig durch Umformen oder Eindrücken erzeugt ist, sowohl an dem Gewindegrund als auch vollständig an beiden Gewindeflanken.

Der Gewindegrund 81C des Vorgewindeprofils 81 ist von geringerer Längenausdehnung als der Gewindegrund 82C des Gewindeformprofils 82 (im Längsschnitt senkrecht zu den Mittelachsen M1 und M2). Die beiden Flanken 81A und 81B des Vorgewindeprofils 81 sind unter den Winkel γ1 zueinander geneigt und die Flanken 82A und 82B des Gewindeformprofils 82 unter dem Winkel γ2, der kleiner ist als γ1. Der Gewindegrund 82C des Gewindeformprofils 82 ragt um den radialen Abstand ΔR weiter nach außen.

Wie in FIG 10 dargestellt, ergibt die Überlagerung der beiden Profile 81 und 82 ein Eindrückvolumen, das im Bereich der flankenseitigen Eindrückvolumen ΔVA und Eindrückvolumen ΔVB zwischen den Flanken 81A und 82A bzw. 81B und 82B zum Gewindegrund oder nach innen hin zunimmt und dort im Wesentlichen, als Eindrückvolumen ΔVC, etwa gleichmäßig dick ist entsprechend dem radialen Abstand ΔR. Wie in FIG 10 rechte Seite erkennbar, ist die Verfestigung somit zum Endgewindegrund 83C hin größer.

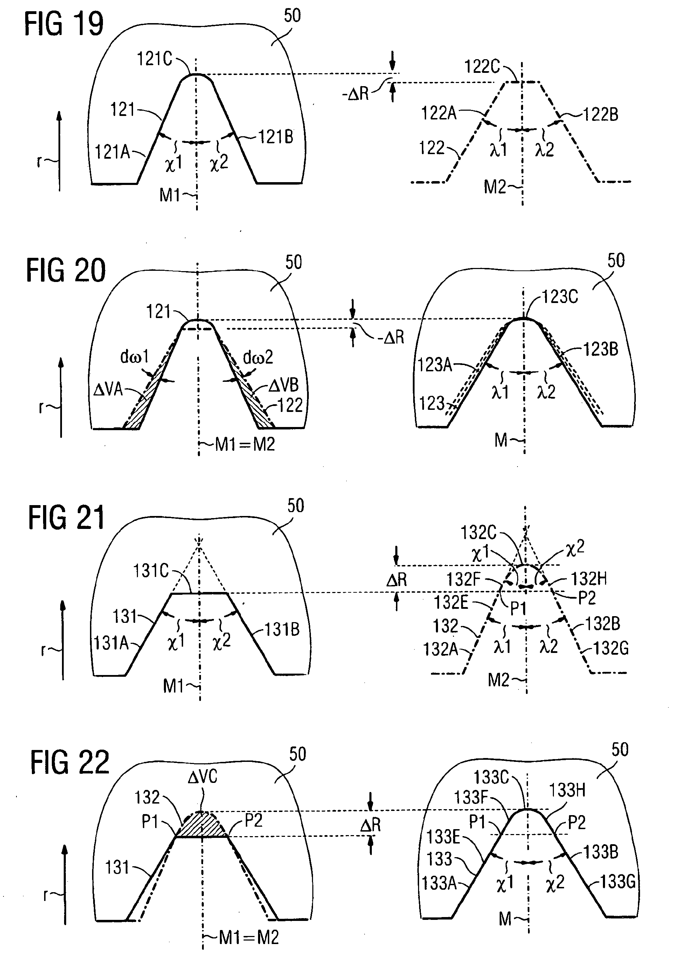

In der Ausführungsform gemäß FIG 11 und 12 weist das Vorgewindeprofil 91 zwei geradlinige Flanken 91A und 91B auf, die den Winkel γ1 zueinander einschließen und über einen gerundeten Gewindegrund 51C miteinander verbunden sind. Das Gewindeformprofil 92 weist zwei geradlinige Flanken 92A und 92B auf, die einen Winkel γ2, der größer ist als der Winkel γ1, einschließen und über einen geradlinigen horizontalen Gewindegrund 92C miteinander verbunden sind (trapezförmiges Gewindeformprofil). Eine Besonderheit der Ausführungsform gemäß FIG 11 und 12 ist nun, dass der radiale Abstand des Gewindegrundbereichs 92C des Gewindeformprofils 92 radial weiter nach innen versetzt ist als der Gewindegrundbereich 91C des Vorgewindeprofils 91. Dadurch ergibt sich ein negativer radialer Abstand -ΔR und in der Überlagerung der beiden Profile 91 und 92 ergibt sich, wie in FIG 20 gezeigt, keine Umformung im Bereich des Gewindegrundes 91C des Vorgewindeprofils 91 und der inneren Bereiche der Flanken 91A und 91B, sondern lediglich in den nach außen verlaufenden Teilbereichen der Flanken 91A und 91B des Vorgewindes 91. Es resultiert somit ein Eindrückvolumen des Gewindeformprofils 92 ΔVA zwischen den Flanken 91A und 92A und ΔVB zwischen den Flanken 91B und 92B, das jeweils vom Gewindegrund 91C nach außen hin zunimmt, wobei die Zunahme durch die Winkeldifferenz γ2 - γ1 bestimmt ist. Im Endgewindeprofil 93 ist somit der Gewindegrund 93C durch das ursprüngliche Vorgewinde und dessen Gewindegrund 91C gebildet und die Flanken 93A und 93B sind im Wesentlichen geformt und sind durch die Flanken 92A und 92B des Gewindeformprofils 92 vorgegeben.

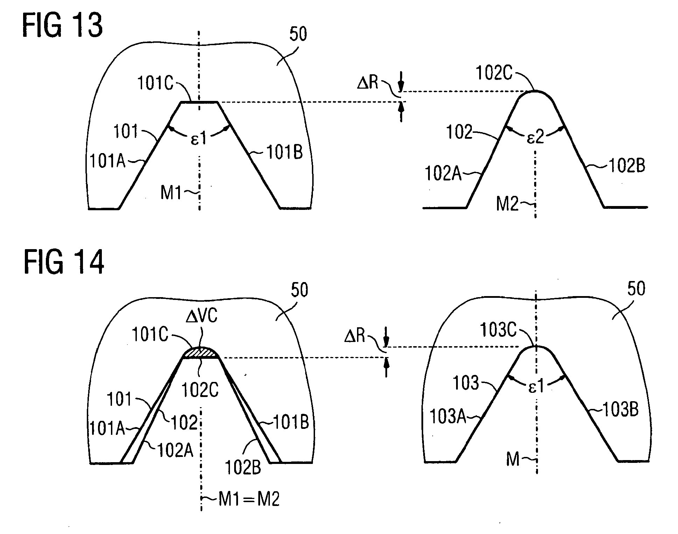

In der Ausführungsform gemäß FIG 13 und 14 ist das Vorgewindeprofil 101 trapezförmig mit zwei geradlinigen Flanken 101A und 101B, die den Winkel ε1 zueinander einschließen, und einem flachen Gewindegrund 51C. Das Gewindeformprofil 102 hat zwei geradlinige Flanken 102A und 102B auf, die einen Winkel ε2 > ε1 einschließen und über einen runden Gewindegrund 102C miteinander verbunden sind.

In der Überlagerung der beiden Profile 101 und 102 ergibt sich, wie in FIG 14 gezeigt, nur eine Umformung im Bereich des Gewindegrundes 101C des Vorgewindeprofils 101, also ein Eindrückvolumen ΔVC zwischen Gewindegrund 101C und 102C, nicht jedoch an den Flanken.

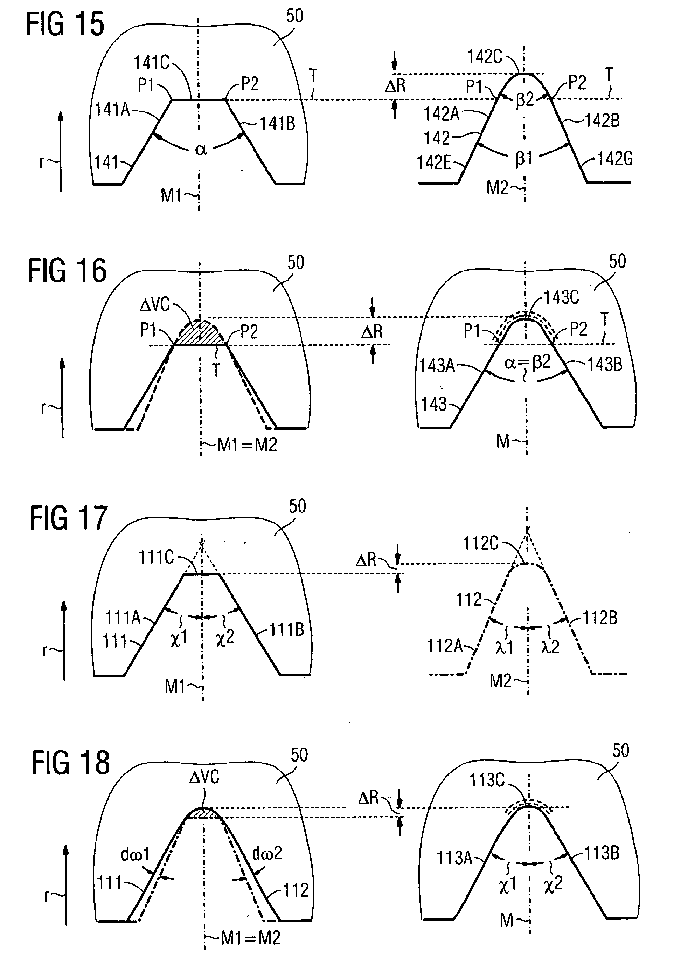

In der Ausführungsform gemäß FIG 15 und 16 ist das Vorgewindeprofil 141 trapezförmig mit zwei geradlinigen Flanken 141A und 141B, die den Winkel α zueinander einschließen, und einem flachen Gewindegrund 141C, der auf Höhe einer Trennlinie T verläuft, die Übergangspunkte P1 und P2 zwischen Flanken 141A und 141B und Gewindegrund 141C definiert. Das Gewindeformprofil 142 weist dagegen zwei Flanken 142A und 142B, auf, die an den durch die Trennlinie T definierten Übergangspunkten P1 und P2 in zwei lineare Teilflankenbereiche 142E und 142F bzw. 142G und 142H unterteilt. Die äußeren Teilflankenbereiche 142E und 142G schließen den Winkel β1 und die inneren Teilflankenbereiche 142F und 142H den Winkel β2 miteinander ein mit β2 > β1.

Die Überlagerung der beiden Profile 141 und 142 mit übereinstimmenden Mittelachsen M1 und M2 und gleichen Winkeln α = β2 führt gemäß FIG 16 zu einem Endgewindeprofil 143 mit durchgehend geradlinigen Endgewindeflanken 143A und 143B und einem durch die Volumenverdrängung ΔVC ausschließlich am Gewindegrund 141C innerhalb der Übergangspunkte P1 und P2 liegenden geformten Endgewindegrund 143C, der sich aus der Form des Gewindegrunds 142C ergibt.

In den bislang beschriebenen Ausführungsformen sind die Profile symmetrisch bezüglich ihrer Mittelachsen und wurden ihre Mittelachsen in Deckung gebracht, so dass auch das Endgewindeprofil symmetrisch bezüglich der resultierenden Mittelachse ist. Es ist aber auch möglich, die Profile unsymmetrisch zu gestalten und/oder ihre Mittelachsen nicht zur Deckung zu bringen und dabei zu symmetrischen wie auch asymmetrischen Endgewindeprofilen zu gelangen, wie auch anhand der folgenden Ausführungsbeispiele deutlich wird.

In der Ausführungsform gemäß FIG 17 und 18 sind das Vorgewindeprofil 111 und das Gewindeformprofil 112 jeweils asymmetrisch zu ihren Mittelachsen M1 bzw. M2 ausgebildet. Es sind die beiden linearen Flanken 111A und 111B des Vorgewindeprofils 111 unter unterschiedlichen Neigungswinkeln 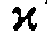 1 und 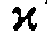 2 zur Mittelachse M1 und die beiden linearen Flanken 112A und 112B des Gewindeformprofils 112 unter unterschiedlichen Neigungswinkeln λ1 und λ2 zur Mittelachse M2 angeordnet. Es gilt somit 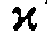 1 ≠ 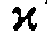 2 und λ1 ≠ λ2 und darüber hinaus auch λ1 < 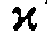 1 sowie λ2 < 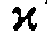 2. Die Flanken 111A und 111B des Vorgewindeprofils 111 ragen also seitlich weiter nach außen als die Flanken 112A und 112B des Gewindeformprofils 112 und zwar um den Differenzwinkel dω1 = 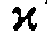 1 - λ1 bzw. dω2 = 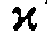 2 - λ2. Der runde Gewindegrundbereich 112C des Gewindeformprofils 112 ragt radial um ΔR weiter nach außen als der abgeflachte Vorgewindegrund 111C.

Dies resultiert gemäß FIG 18 in einem Eindrückvolumen ΔVC bei der Profilüberlagerung mit übereinstimmenden Mittelachsen M1 und M2 und einem Endgewindeprofil 113 mit einer Umformung und Verfestigung nur am Gewindegrund 113 des Endgewindeprofils 113 und Endgewindeflanken 113A und 113B, die unter dem Winkel 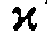 1 bzw. 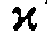 2 zur Mittelachse M, die mit den Mittelachsen M1 und M2 zusammenfällt, gerichtet sind.

Die Ausführungsform gemäß FIG 19 und 20 hat ein asymmetrisches Vorgewindeprofil 121 mit linearen Flanken 121A und 121B, die unter unterschiedlichen Neigungswinkeln 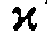 1 und 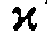 2 zur Mittelachse M1 geneigt sind, und einem runden Gewindegrund 121C. Das Gewindeformprofil 122 ist ebenfalls asymmetrisch zu seiner Mittelachse M2 ausgebildet mit zwei linearen Flanken 122A und 122B mit unterschiedlichen Neigungswinkeln λ1 und λ2 zur Mittelachse M2. Es gilt somit wieder 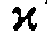 1 ≠ 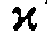 2 und λ1 ≠ λ2 und darüber hinaus hier nun λ1 > 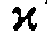 1 sowie 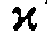 2 > 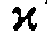 2. Die Flanken 122A und 122B des Gewindeformprofils 122 sind um den Differenzwinkel dω1 = λ1 - 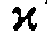 1 bzw. dω2 = λ2 - 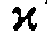 2 weiter außen als die Vorgewindeflanken 121A und 121B. Der Gewindegrundbereich 122C des Gewindeformprofils 122 ist radial um - ΔR zurückversetzt gegenüber dem Vorgewindegrund 111C.

Die Überlagerung der Profile 121 und 122 ergibt, wie in FIG 20 zu sehen, um die Differenzwinkel dω1 bzw. dω2 sich vom Gewindegrund weg nach außen aufweitende Eindrückvolumina ΔVA und ΔVB an den Flanken bei übereinstimmenden Mittelachsen M1 und M2 und schließlich ein Endgewindeprofil 123 mit einer Umformung und Verfestigung nur an den Endgewindeflanken 123A und 123B, nicht jedoch am Endgewindegrund 123, der spanend erzeugt bleibt. Die Endgewindeflanken 123A und 123B sind unter dem Winkel λ1 bzw. λ2 zur Mittelachse M geneigt.

In der Ausführungsform gemäß FIG 21 und 22 weist das Vorgewindeprofil 131 zwei lineare Flanken 131A und 131B mit Neigungswinkeln 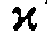 1 und 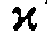 2 zur Mittelachse M1 auf mit 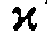 1 ≠ 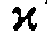 2 in asymmetrischer Ausgestaltung (oder 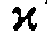 1 = 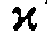 2 in symmetrischer Ausgestaltung) und einen flachen Gewindegrund 131C. Beim Gewindeformprofil 132 sind dagegen die Flanken 132A und 132B in jeweils zwei Teilflankenbereiche 132E und 132F bzw. 132G und 132H unterteilt mit Übergangspunkten P1 und P2 an der Trennlinie T und unterschiedlichen Neigungswinkeln λ1 und 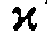 1 bzw. λ2 und 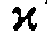 2 zur Mittelachse M2. Dabei gilt λ1 ≠ λ2 und darüber hinaus auch λ1 < 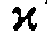 1 sowie λ2 < 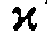 2. Der Gewindegrundbereich 132C des Gewindeformprofils 132 ragt radial um ΔR weiter nach außen als der auf der Trennlinie T liegende Vorgewindegrund 131C.

Gemäß FIG 22 ergibt dies bei der Profilüberlagerung der Profile 131 und 132 mit übereinstimmenden Mittelachsen M1 und M2 ein Eindrückvolumen ΔVC nur am Vorgewindegrund 131C und ein Endgewindeprofil 133, bei dem lineare Endgewindeflanken 133A und 133B unter dem Winkel 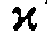 1 bzw. 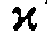 2 zur Mittelachse M, die mit den Mittelachsen M1 und M2 zusammenfällt, gerichtet sind. Beim Endgewindeprofil 133 sind die inneren Teilflankenbereiche 133F und 133H oberhalb von P1 und P2 und der Gewindegrund 153C umgeformt und die äußeren Teilflankenbereiche 133E und 133G unterhalb von P1 und P2 spanend erzeugt.

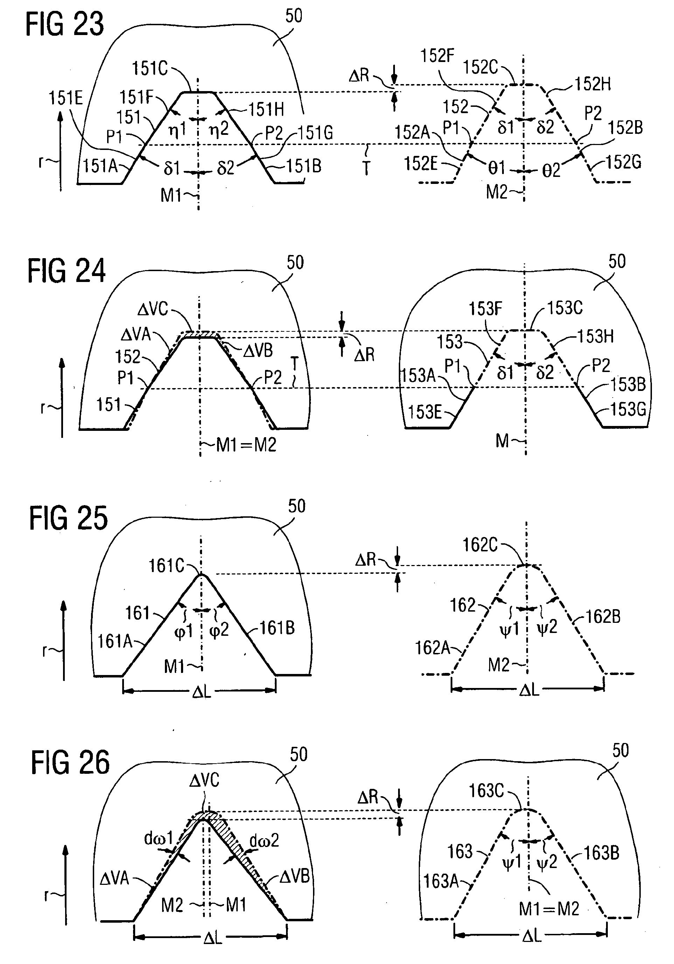

In FIG 23 und 24 sind ein Vorgewindeprofil 151 mit jeweils in zwei geradlinige Teilflankenbereiche 151E und 151F sowie 151G und 151H an Übergangspunkten P1 und P2 an der Trennlinie T unterteilten Vorgewindeflanken 151A und 151B und einem flachen Gewindegrund 151C mit oder ohne abgerundete Übergangsbereichen zu den Flanken 151A und 151B einerseits und ein Gewindeformprofil 152 ebenfalls mit jeweils in zwei geradlinige Teilflankenbereiche 152E und 152F sowie 152G und 152H an Übergangspunkten P1 und P2 an derselben Trennlinie T unterteilten Flanken 152A und 152B und einem flachen, zum Vorgewindegrund 151C um ΔR versetzten Gewindegrund 152C mit oder ohne abgerundete Übergangsbereichen zu den Flanken 152A und 152B dargestellt. Es sind beim Vorgewindeprofil 151 die inneren Teilflankenbereiche 151F und 151H unter den größeren Winkeln η1 und η2 und die äußeren Teilflankenbereiche 151E und 151G unter den kleineren Winkeln δ1 und δ2 zur Mittelachse M1 geneigt. Beim Gewindeformprofil 152 sind die inneren Teilflankenbereiche 152F und 152H unter den Winkeln δ1 und 82 und die äußeren Teilflankenbereiche 152E und 152G unter den kleineren Winkeln θ1 und 62 zur Mittelachse M2 geneigt.

Dadurch ergibt sich bei Überlagerung der zwei Profile 151 und 152 mit M1=M2 gemäß FIG 24 ein asymmetrisches Eindrückvolumen mit einem Eindrückvolumen ΔVC konstanter Breite am Gewindegrund und zwei sich um dω1 = η1 - δ1 und dω2 = η2 - δ2 mit dω1 ≠ dω2 nach innen aufweitenden Eindrückvolumina ΔVA und ΔVB an den Flanken. Das Endgewindeprofil 153 ist dagegen symmetrisch bezüglich seiner Mittelachse M und weist zwei geradlinige Flanken 153A und 153B auf, von denen die Teilflankenbereiche 153F und 153H oberhalb der Punkte P1 und P2 zusammen mit dem Gewindegrund 153C umgeformt sind und die Teilflankenbereiche 153E und 153G unterhalb von P1 und P2 zerspant sind.

In der Ausführungsform gemäß FIG 25 und 26 werden ein Vorgewindeprofil 161 und ein Gewindeformprofil 162 bei der Überlagerung mit ihren Mittelachsen M1 und M2 nicht in Deckung gebracht, sondern leicht parallel versetzt. Die geraden Vorgewindeflanken 161A und 161B sind unter unterschiedlichen Winkeln ϕ1 und ϕ2 zur Mittelachse M1 und die geraden Flanken 162A und 162B des Gewindeformprofils 162 sind unter voneinander verschiedenen Winkeln ψ1 und ψ2 zur Mittelachse M2 geneigt mit ϕ1 > ψ1 und ϕ2 > ψ2. Die Basislänge ΔL am Profil- oder Zahnfuß ist bei beiden Profilen 161 und 162 gleich

In FIG 26 sieht man, dass die Mittelachsen M1 und M2 parallel zueinander verschoben sind und zwar vorzugsweise so, das die Basislängen ΔL oder die Fußpunkte beider Profile 161 und 162 sich genau überdecken. Es ergibt sich ein hinsichtlich der Mittelachse M1 des Vorgewindeprofils 161 asymmetrisches Eindrückvolumen, das sich aus einem Eindrückvolumen ΔVC am Gewindegrund und zwei um dω1 = ϕ1 - ψ1 und dω2 = ϕ2 - ψ2 mit dω1 ≠ dω2 zum Gewindegrund hin zunehmenden Eindrückvolumina ΔVA und ΔVB an den Flanken. Das Endgewindeprofil 163 hat entsprechend zwei um und ψ1 bzw. ψ2 zur Mittelachse M = M2 geneigte Endgewindeflanken 163A und 163B und den Gewindegrund 163C und ist über seine gesamte Profillänge (auch) umgeformt. Die Mittelachsen M1und M2 sowie M bei einem unsymmetrischen Profil können beispielsweise durch den radial tiefsten bzw. höchsten Punkt des Profils verlaufen oder auch anders als durch das Profil verlaufende Referenzachsen definiert werden.

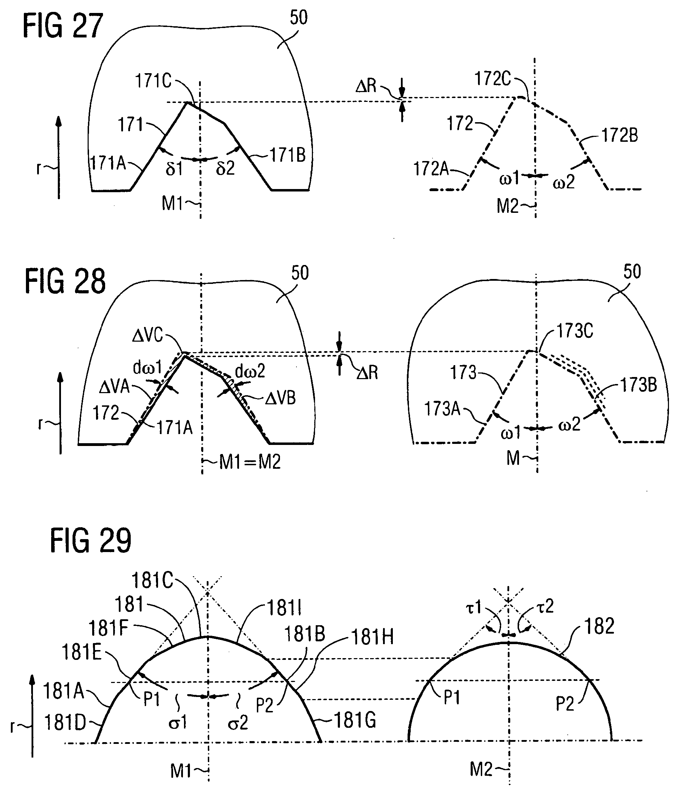

Die FIG 27 und 28 zeigen ein Sonderprofil mit einer asymmetrischen Gestalt, das beispielsweise zum Erzeugen eines selbstsichernden Gewindes (Self-Lock-Gewinde) gemäß *EMUGE-Handbuch, Seite 294*, geeignet ist. Das Endgewindeprofil 173 weist zwei unter unterschiedlichen Winkeln ω1 und ω2 zur Mittelachse M geneigte lineare Flanken 173A und 173B auf und einen überwiegend schräg und teilweise horizontal verlaufenden Gewindegrund 173C. Zur Erzeugung dieses Endgewindeprofils 173 wird ein Vorgewindeprofil 171 spanend erzeugt mit zwei unter den Winkeln 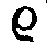 1 und 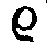 2 zur Mittelachse M1 geneigten linearen Flanken 171A und 171B und einem schrägen linearen Gewindegrund 171C (ohne horizontalen Abschnitt). Das Gewindeformprofil 172 zum weiteren Umformen des Vorgewindeprofils 171 weist die bereits unter den Winkeln ω1 und ω2 des Endgewindeprofils 173 zur Mittelachse M2 geneigten linearen Flanken 172A und 172B auf sowie den Gewindegrund 172C, der schon dem Endgewindegrund 173C entspricht (mit horizontalem und schrägem Abschnitt) und um ΔR radial weiter zugestellt ist als der Vorgewindegrund 171C.

Die Überlagerung der Profile 171 und 172 mit M1 = M2 zeitigt die Eindrückvolumina ΔVA und ΔVB an den Flanken, die sich um die Winkel dω1 = 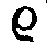 1 - ω1 und dω2 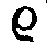 2 - ω2 nach innen aufweiten, und das Eindrückvolumen ΔVC am Gewindegrund, das an den zueinander parallel verlaufenden Schrägen der Gewindegrunde 171C und 172C konstante Breite aufweist. Das Endgewindeprofil 173 übernimmt die Form des Gewindeformprofils 172 und ist somit über die gesamte Profillänge weiter umgeformt. Die Verfestigung ist am größten am Übergang zwischen der Flanke 173B und dem Gewindegrund 173C, was für ein Self-Lock-Gewinde günstig ist.

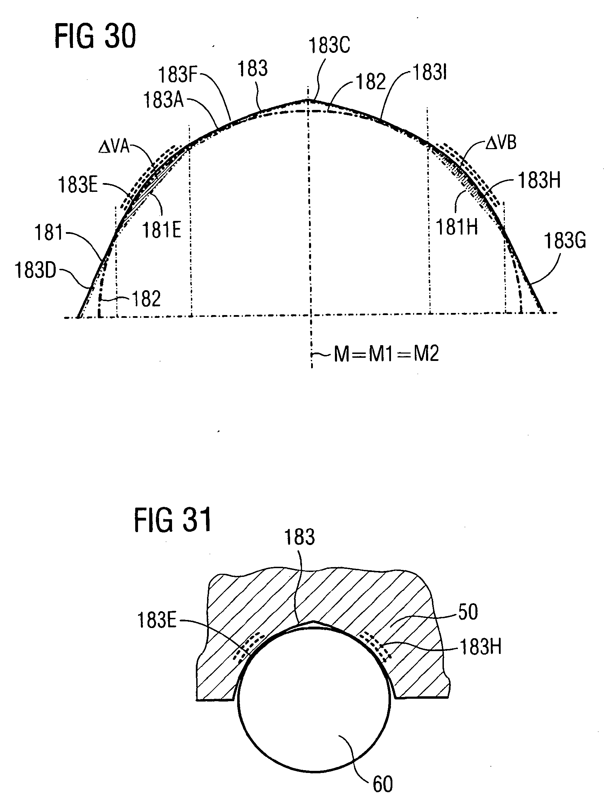

In FIG 29 bis 31 ist ein weiteres Sonderprofil als aus einem Vorgewindeprofil 181 und einem Gewindeformprofil 182 überlagertes Endgewindeprofil 183 gezeigt, das für ein Kugelumlaufgewinde geeignet ist. Bei solchen Kugelumlaufgewinden sollten, wie aus FIG 31 ersichtlich, die Laufflächen für die Kugeln 60, die den Flankenteilbereichen 183E und 183 H des Endgewindeprofils 183 entsprechen, für gute Ablaufeigenschaften eine möglichst gute Oberflächenqualität haben oder möglichst glatt sein und werden deshalb gemäß der Erfindung durch Umformen nachbearbeitet, was eine bessere und glattere Oberfläche bewirkt als ein spanendes Herstellen.

Das geschnittene Vorgewindeprofil 181 setzt sich polygonal aus mehreren geraden Flankenteilabschnitten 181D, 181E und 181F bei der Flanke 181A und 181 G, 181 H und 181I bei der Flanke 181B und einem spitzen Gewindegrund 181C symmetrisch zur Mittelachse M1 zusammen. Das vorgeschnittene Vorgewindeprofil 181 kann aber auch anders gestaltet sein, z.B. kann es die gleichen Radien haben wie das Fertig- oder Endgewindeprofil, aber im Durchmesser abgesetzt sein, oder kleinere Radien aufweisen als das Endgewindeprofil. Das Gewindeformprofil 182 ist dagegen kreisrund als Halbkreis mit der Mittelachse M2 ausgebildet. Die Neigungswinkel der Teilflankenabschnitte 181E und 181H sind mit σ1 und σ2 bezeichnet und sind jeweils größer als die als Tangentenwinkel an das Kreisprofil in der Mitte oder an Punkten P1 und P2 gleicher radialer Tiefe τ1 und τ2.

Beim Nachformen des Vorgewindeprofils 181 mit dem Gewindeformprofil 182 gemäß FIG 30 mit M = M1 = M2 wird das Werkstück 50 somit nur an den Teilflankenabschnitten 183E und 183H des Endgewindeprofils 183 um die Eindrückvolumina ΔVA und ΔVB zwischen dem kreisrunden Gewindeformprofil 183, das dort weiter nach außen ragt, und dem jeweiligen Vorgewindeflankenabschnitt 181E und 181G eingedrückt und dort verfestigt, während es im Übrigen nicht weiter umgeformt wird, also das Endgewindeprofil 183 ansonsten geschnitten ist.

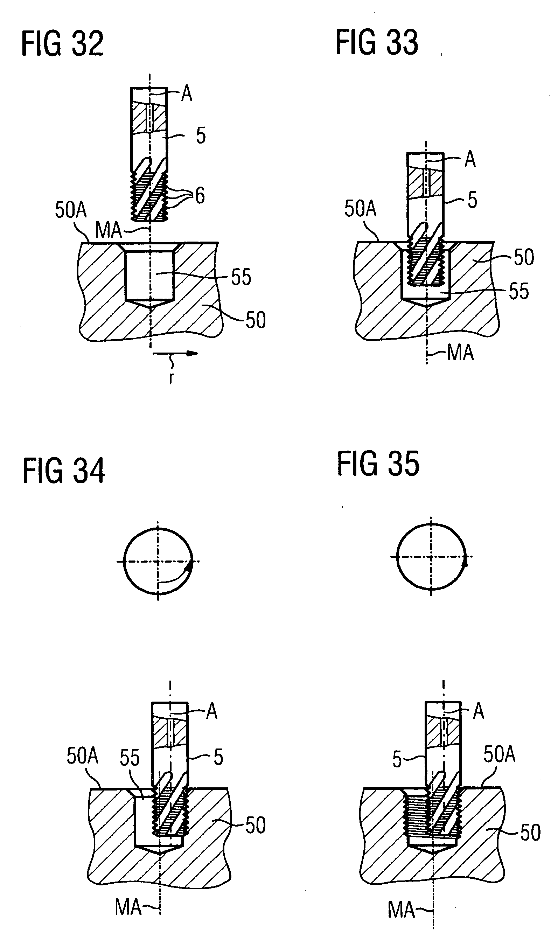

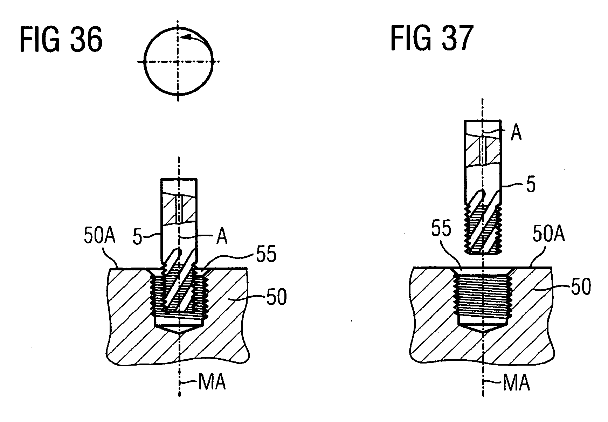

In den FIG 32 bis 37 ist eine Arbeitsbewegung mit einem als Gewindefräser ausgebildeten Werkzeug 5 mit Reihe von Gewindefräszähnen 6 zum Erzeugen des Vorgewindes gemäß der Erfindung dargestellt. Zunächst wird das Werkzeug 5 mit seiner Werkzeugachse A koaxial zu einer Mittelachse MA einer Bohrung 55 im Werkstück 50 positioniert (FIG 32). Von dieser Ausgangsposition wird das Werkzeug 5 nun mit einer linearen Vorschubbewegung axial zur Werkzeugachse A und Mittelachse MA in die Bohrung 55 im Werkstück 50 eingeführt, insbesondere auf die Gewindetiefe eingetaucht (FIG 33). Nun wird mit einem Einfahrradius oder einer Einfahrschleife das Werkzeug 5 gemäß FIG 34 zur Innenwand der Bohrung 55 radial zugestellt. Gemäß FIG 35 wird das Werkzeug 5 nun mit einer sich aus der Zahl der Gewindefräszähne 6 und der Zahl der gewünschten Gewindeumläufe andererseits ergebenden Zahl von Umläufen seiner Werkzeugachse A um die Mittelachse MA in einer Zirkularbewegung bei gleichzeitiger Vorschubbewegung parallel zur Werkzeugachse A bewegt. Dadurch erzeugt das Werkzeug 5 in der Innenwand der Bohrung 55 ein Innengewinde als Vorgewinde 7 mit einer Steigung, die sich aus der Vorschubgeschwindigkeit und der Beabstandung der einzelnen Gewindefräszähne 6 des Werkzeugs 5 ergibt. Nach dieser schraubenförmigen Arbeitsbewegung gemäß FIG 35 wird nun gemäß FIG 36 das Werkzeug 5 wieder radial zur Mitte gestellt, so dass die Werkzeugachse A und die Mittelachse MA wieder koaxial zueinander sind. Für diese Zurückfahrbewegung ist wieder ein Ausfahrradius vorgesehen. Gemäß FIG 37 wird in einer axialen Rückholbewegung, das Werkzeug 5 aus der Bohrung 55 axial zur Mittelachse MA herausbewegt zurück in seine Ausgangsposition. Die Mittelachse MA des erzeugten Vorgewindes 7 in der Bohrung 55 fällt mit der Mittelachse der Zirkularbewegung des Werkzeugs 20 während der Arbeitsbewegung in FIG 35 zusammen.

Das Vorgewindeprofil 21 wird vorzugsweise mit einem Gewindebohrer oder einem Gewindefräser oder auch einem Zirkularbohrgewindefräser erzeugt.

Im Anschluss an diese spanabhebende Erzeugung des Vorgewindes 7 wird nu in einem zweiten Arbeitschritt das Vorgewinde 7 zum Erzeugen des Endgewindes weiter ausgeformt mit einem mit dem Gewindeformprofil als Wirkprofil versehenen Gewindeformwerkzeug, entweder einem Gewindefurcher oder einem Zirkulargewindeformer.

Alternativ können auch beide Arbeitsschritte mit einem Kombinationswerkzeug durchgeführt werden, das axial zur Werkzeugachse versetzt zueinander einen Gewindebohrbereich und/oder einen Gewindefräsbereich als schneidenden Bereich und einen Gewindefurchbereich und/oder einen Zirkulargewindeformbereich als formenden Bereich aufweist, die zeitlich nacheinander in das Werkstück eingreifen, ,

Die gekrümmten Gewindegrundbereiche sind vorzugsweise in allen Ausführungsformen bezogen auf den Innenraum oder den Gewindegang konvex und insbesondere kreisförmig oder elliptisch oder parabelförmig, gekrümmt.

Das Gewindeformprofil ergibt sich in allen Ausführungsformen als Wirkprofil oder überlagertes oder effektives Profil eines Gewindeformprozesses oder eines oder mehrerer Gewindeformwerkzeuge(s) und entspricht bei einem Gewindeformwerkzeug mit mehreren Drückstollen oder Formzähnen der Überlagerung aller einzelnen Profile der einzelnen Drückstollen oder Formzähne.

### Bezugszeichenliste

- 5: Werkzeug
- 6: Gewindefräszähne
- 7: Vorgewinde
- 20: Werkzeug
- 21: Vorgewindeprofil
- 21A, 21B: Gewindeflanken
- 21C: Gewindegrund
- 21 E bis 21H: Teilflankenbereich
- 22: Gewindeformprofil
- 22A, 22B: Flanken
- 22E bis 22H: Teilflankenbereich
- 23: Endgewindeprofil
- 23C: Gewindegrund
- 23E bis 23H: Teilflankenbereich
- 31: Vorgewindeprofil
- 31A, 31B: Flanke
- 31C: Gewindegrundbereich
- 31E bis 31H: Teilflankenbereich
- 32: Gewindeformprofil
- 32A, 32B: Flanke
- 32C: Gewindegrundbereich
- 32E bis 32H: Teilflankenbereich
- 33: Endgewindeprofil
- 33A, 33B: Flanken
- 33C: Gewindegrund
- 33E bis 33H: Teilflankenbereiche
- 41: Vorgewindeprofil
- 41A, 41B: Flanken
- 41C: Gewindegrund
- 41E bis 41H: Teilflankenbereich
- 42: Gewindeformprofil
- 42E bis 42H: Teilflankenbereich
- 43: Endgewinde
- 43A, 43B: Flanke
- 43E bis 43H: Teilflankenbereich
- 50A: Werkstückoberfläche
- 50: Werkstück
- 51: Vorgewindeprofil
- 51A, 51B: Flanken
- 51C: Gewindegrundbereich
- 51E bis 51H: Teilflankenbereich
- 52: Gewindeformprofil
- 52C: Gewindegrundbereich
- 52E bis 52H: Teilflankenbereich
- 53: Endgewindeprofil
- 53A, 53B: Gewindeflanken
- 53C: Gewindegrund
- 53D bis 53H: Teilflankenbereiche
- 55: Bohrung
- 60: Kugeln
- 81: Vorgewindeprofil
- 81A, 81B: Flanken
- 81C: Gewindegrund
- 82: Gewindeformprofil
- 82A, 82B: Flanken
- 82C: Gewindegrund
- 91: Vorgewindeprofil
- 91A, 91B: Flanken
- 91C: Gewindegrund
- 92: Gewindeformprofil
- 92A, 92B: Flanken
- 92C: Gewindegrund
- 93: Endgewindeprofil
- 93A, 93B: Flanken
- 93C: Gewindegrund
- 101: Vorgewindeprofil
- 101A, 101B: Flanken
- 102: Gewindeformprofil
- 102A, 102B: Flanken
- 102C: Gewindegrund
- 111: Vorgewindeprofil
- 111A, 111B: Flanken
- 111C: Vorgewindegrund
- 112: Gewindeformprofil
- 112A, 112B: Flanken
- 112C: Gewindegrundbereich
- 113: Endgewindeprofil
- 113A, 113B: Endgewindeflanken
- 113C: Gewindegrund
- 121: Vorgewindeprofil
- 121A, 121B: Flanken
- 121C: Gewindegrund
- 122: Gewindeformprofil
- 122A, 122B: Flanken
- 123: Endgewindeprofil
- 123A, 123B: Endgewindeflanken
- 123C: Endgewindegrund
- 131: Vorgewindeprofil
- 131A, 131B: Flanken
- 131C: Vorgewindegrund
- 132: Gewindeformprofil
- 132A, 132B: Flanken
- 132C: Gewindegrundbereich
- 132E..132H: Teilflankenbereich
- 133: Endgewindeprofil
- 133A, 133B: Flanke
- 133F.. 133H: Teilflankenbereich
- 141: Vorgewindeprofil
- 141A, 141B: Flanken
- 141C: Gewindegrund
- 142: Gewindeformprofil
- 142A, 142B: Flanken
- 142C: Gewindegrund
- 142E.. 142H: Teilflankenbereich
- 143: Endgewindeprofil
- 143A, 143B: Endgewindeflanken
- 143C: Endgewindegrund
- 151: Vorgewindeprofil
- 151A, 151B: Flanken
- 151C: Vorgewindegrund
- 151E.. 151H: Teilflankenbereich
- 152: Gewindeformprofil
- 152A, 152B: Flanken
- 152C: Gewindegrund
- 152E.. 152H: Teilflankenbereich
- 153: Endgewindeprofil
- 153A, 153B: Flanken
- 153C: Gewindegrund
- 153E ...153H: Teilflankenbereich
- 161: Vorgewindeprofil
- 161A, 161B: Vorgewindeflanken
- 162: Gewindeformprofil
- 162A, 162B: Flanken
- 163: Endgewindeprofil
- 163A, 163B: Endgewindeflanken
- 163C: Gewindegrund
- 171: Vorgewindeprofil
- 171A, 171B: Flanken
- 171C: Gewindegrund
- 172: Gewindeformprofil
- 172A, 172B: Flanken
- 172C: Gewindegrund
- 173: Endgewindeprofil
- 173A, 173B: Flanken
- 173C: Gewindegrund
- 181: Vorgewindeprofil
- 181A, 181B: Flanken
- 181C: Gewindegrund
- 181D..181H: Flankenteilabschnitte
- 182: Gewindeformprofil
- 183: Endgewindeprofil
- 183D.. 183H: Teilflankenabschnitte

A Werkzeugachse
M, M1, M2 Mittelachse
MA Mittelachse
P1, P2 Übergangpunkte
r Radius
T Trennlinie
α1,α2,β1,β2 Winkel
γ1, γ2,δ1, δ2 Winkel
ε1, ε2, 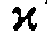 1, 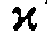 2 Winkel
λ2, λ2,ϕ1,ϕ2 Winkel
τ1,τ2,dω1,dω2 Winkel
θ1, θ2,σ1, σ2 Winkel
ω1,ω2, 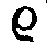 1, 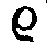 2 Winkel
ΔR radialer Abstand
ΔVA, ΔVB,ΔVC Eindrückvolumen

## Patentansprüche

1. Verfahren zur Erzeugung eines Gewindes in einem Werkstück bei dem
a) in wenigstens einem ersten Arbeitsschtitt in dem Werkstück (50) durch Abtragen von Material des Werkstücks oder spanabhebend ein Vorgewinde erzeugt wird oder wurde, dessen Vorgewindeprofil (21) zwei Vorgewindeflanken (21A, 21B) und einen die beiden Vorgewindeflanken verbindenden Vorgewindegrund (21C) aufweist,
b) in wenigstens einem zweiten Arbeitsschritt durch plastisches Eindrücken des Materials des Werkstücks wenigstens in einem Teilbereich des Vorgewindeprofils mittels wenigstens eines Gewindeformprofils, das zwei Flanken und einen die beiden Flanken verbindenden Grundbereich aufweist, um ein vorgegebenes oder vorgebbares Eindrückvolumen (ΔVA, ΔVB, ΔVC) ein Endgewinde mit einem Endgewindeprofil (23), das vorzugsweise zwei Endgewindeflanken (23A, 23B) und einen die beiden Endgewindeflanken verbindenden Endgewindegrund (23C) aufweist, erzeugt wird,
c) wobei wenigstens eine der Vorgewindeflanken (21A) wenigstens in einem Flankenteilbereich (21E, 21F) unter einem ersten Neigungswinkel (α1/2 oder α2/2) zu einer Mittelachse (M1) des Vorgewindeprofils geneigt ist und wenigstens eine der Flanken (22A) des Gewindeformprofils wenigstens in einem Flankenteilbereich (22E, 22F) unter einem zweiten Neigungswinkel (β1/2 oder β2/2) zu einer Mittelachse (M2) des Gewindeformprofils geneigt ist, **dadurch gekennzeichnet,**
d) **dass** der erste Neigungswinkel (α1/2 oder α2/2) und der zweite Neigungswinkel (β1/2 oder β2/2) verschieden voneinander sind.

2. Verfahren nach Anspruch 1, bei dem das Material des Werkstücks zumindest im unter dem ersten Neigungswinkel zu der Mittelachse geneigten Flankenteilbereich des Vorgewindeprofils mittels zumindest des unter dem zweiten Neigungswinkel zu der Mittelachse geneigten Flankenteilbereichs des Gewindeformprofils eingedrückt wird.

3. Verfahren nach Anspruch 1 oder Anspruch 2, bei dem auch eine zweite der Vorgewindeflanken (21B) wenigstens in einem Flankenteilbereich (21G, 21H) unter einem dritten Neigungswinkel (α1/2 oder α2/2) zu der Mittelachse geneigt ist und auch eine zweite der Flanken (22B) des Gewindeformprofils wenigstens in einem Flankenteilbereich unter einem vierten Neigungswinkel (β1/2 oder β2/2) zu der Mittelachsen (M2) geneigt ist und bei dem der dritte Neigungswinkel (α1/2 oder α2/2) und der vierte Neigungswinkel (β1/2 oder β2/2) verschieden voneinander sind,
wobei insbesondere der dritte Neigungswinkel gleich dem ersten Neigungswinkel ist und/oder der vierte Neigungswinkel gleich dem zweiten Neigungswinkel ist oder wobei insbesondere der dritte Neigungswinkel verschieden zu dem ersten Neigungswinkel ist und/oder der vierte Neigungswinkel verschieden zu dem zweiten Neigungswinkel ist.

4. Verfahren nach einem der vorhergehenden Ansprüche, bei dem wenigstens eine Vorgewindeflanke und/oder wenigstens eine Flanke des Gewindeformprofils und/oder wenigstens eine Endgewindeflanke linear oder gerade ausgebildet ist und/oder bei dem wenigstens eine Vorgewindeflanke und/oder wenigstens eine Flanke des Gewindeformprofils und/oder wenigstens eine Endgewindeflanke wenigstens teilweise gekrümmt, insbesondere konvex gekrümmt, ausgebildet ist, wobei ein Neigungswinkel an einen gekrümmten Flankenteilbereich als Winkel zwischen einer Tangente und der Mittelachse definiert ist.

5. Verfahren nach einem der vorhergehenden Ansprüche, bei dem jede Mittelachse senkrecht zu einer Gewindemittelachse des Endgewindes gerichtet ist oder wird.

6. Verfahren nach einem der vorhergehenden Ansprüche, bei dem
a) in dem zweiten Arbeitsschtitt das Material des Werkstücks über wenigstens einen Teilbereich wenigstens einer der beiden Vorgewindeflanken oder der im Wesentlichen über die gesamte(n) Vorgewindeflanke(n) eingedrückt wird
oder
b) bei dem wenigstens eine oder beide die Endgewindeflanke(n) wenigstens teilweise oder insgesamt durch plastisches Eindrücken in dem zweiten Arbeitsschritt geformt wird oder werden.

7. Verfahren nach einem der Ansprüche 1 bis 5, bei dem
a) in dem zweiten Arbeitsschritt das Material des Werkstücks im Wesentlichen nur im Bereich des Vorgewindegrunds eingedrückt wird
oder
b) bei dem der Endgewindegrund durch plastisches Eindrücken in dem zweiten Arbeitsschritt geformt wird.

8. Verfahren nach einem der vorhergehenden Ansprüche, bei dem wenigstens eine Vorgewindeflanke und/oder wenigstens eine Flanke des Gewindeformprofils jeweils aus wenigstens zwei Teilflankenbereichen zusammengesetzt ist, die unter unterschiedlichen Neigungswinkeln zur Mittelachsen gerichtet sind,
wobei insbesondere beim Vorgewindeprofil und/oder beim Gewindeformprofil die Teilflankenbereiche der Flanke(n) jeweils linear ausgebildet oder erzeugt werden oder sind.

9. Verfahren nach einem der vorhergehenden Ansprüche, bei dem
a) in dem zweiten Arbeitsschritt das Material des Werkstücks jeweils in wenigstens einem ersten der unterschiedlich geneigten Teilflankenbereiche der Vorgewindeflanke(n) eingedrückt wird und in wenigstens einem zweiten, sich an diesen ersten Teilflankenbereich anschließenden Teilflankenbereich die Vorgewindeflanke(n) im Wesentlichen unverändert bleibt oder bleiben
oder bei dem
b) die Endgewindeflanke(n) in wenigstens einem ersten Teilflankenbereich durch plastisches Eindrücken in dem zweiten Arbeitsschritt geformt werden und in einem zweiten, sich an den ersten Teilflankenbereich anschließenden Teilflankenbereich allein durch den Materialabtrag im ersten Arbeitsschritt erzeugt wird oder werden
oder bei dem
c) in dem zweiten Arbeitsschritt ein Endgewinde mit einem Endgewindeprofil erzeugt wird, bei dem wenigstens eine von dessen Endgewindeflanken sich aus einem äußeren Teilflankenbereich des Vorgewindeprofils und einem inneren Teilflankenbereich des Gewindeformprofils darstellt oder zusammensetzt und/oder wenigstens eine von dessen Endgewindeflanken sich aus einem äußeren Teilflankenbereich des Gewindeformprofils und einem inneren Teilflankenbereich des Vorgewindeprofils darstellt oder zusammensetzt.

10. Verfahren nach Anspruch 8 oder Anspruch 9, bei dem der Neigungswinkel der äußeren Teilflankenbereiche des Vorgewindeprofils gleich dem Neigungswinkel der inneren Teilflankenbereiche des Gewindeformprofils ist.

11. Verfahren nach einem der Ansprüche 8 bis 10, bei dem Übergangspunkte (P1, P2), in denen zwei Teilflankenbereiche einer Flanke ineinander übergehen, bei Vorgewindeprofil und Gewindeformprofil bei dem zweiten Arbeitsschritt im Wesentlichen übereinstimmen oder übereinander oder in einer gemeinsamen Trennlinie oder in gleichem Abstand von einer Mittelachse des Gewindes liegen oder bei dem die Übergangspunkte zwischen den Teilflankenbereichen von Vorgewindeprofil und Gewindeformprofil so aneinander angepasst sind, dass sich jede Endgewindeflanke des Endgewindeprofils jeweils aus einem äußeren Teilflankenhereich des Vorgewindeprofils und einem inneren Teilflankenbereich des Gewindeformprofils darstellt oder ergibt oder zusammensetzt.

12. Verfahren nach einem der vorhergehenden Ansprüche, bei dem in dem zweiten Arbeitsschritt die Mittelachsen (M1, M2) von Vorgewindeprofil und Gewindeformprofil in Deckung gebracht werden oder bei dem in dem zweiten Arbeitsschritt die Mittelachsen (M1, M2) von Vorgewindeprofil und Gewindeformprofil parallel zueinander versetzt angeordnet werden.

## Claims

1. Method for producing a thread in a workpiece, in which,
a) in at least one first work step, a preliminary thread is or was produced in the workpiece (50) by removal of material of the workpiece or by machining, the preliminary-thread profile (21) of said preliminary thread having two preliminary-thread flanks (21A, 21B) and a preliminary-thread base (21C) connecting the two preliminary-thread flanks,
b) in at least one second work step, a final thread having a final-thread profile (23) which preferably has two final-thread flanks (23A, 23B) and a final-thread base (23C) connecting the two final-thread flanks is produced by plastic pressing-in of the material of the workpiece, at least in one subregion of the preliminary-thread profile, by a predetermined or predeterminable pressing-in volume (ΔVA, ΔVA, ΔVA) by means of at least one thread-forming profile which has two flanks and a base region connection the two flanks,
c) wherein at least one of the preliminary-thread flanks (21A) is inclined at a first inclination angle (α1/2 or α2/2) to a centre line (M1) of the preliminary-thread profile, at least in one flank subregion (21E, 21F), and at least one of the flanks (22A) of the thread-forming profile is inclined at a second inclination angle (β1/2 or β2/2) to a centre line (M2) of the thread-forming profile, at least in one flank subregion (22E, 22F), **characterized**
d) **in that** the first inclination angle (α1/2 or α2/2) and the second inclination angle (β1/2 or β2/2) are different from one another.

2. Method according to Claim 1, in which the material of the workpiece is pressed in at least in the flank subregion, inclined at the first inclination angle to the centre line, of the preliminary-thread profile by means of at least the flank subregion, inclined at the second inclination angle to the centre line, of the thread-forming profile.

3. Method according to Claim 1 or Claim 2, in which a second of the preliminary-thread flanks (21B) is also inclined at a third inclination angle (α1/2 or α2/2) to the centre line, at least in one flank subregion (21G, 21H), and a second of the flanks (22B) of the thread-forming profile is also inclined at a fourth inclination angle (β1/2 or β2/2) to the centre line (M2), at least in one flank subregion, and in which the third inclination angle (α1/2 or α2/2) and the fourth inclination angle (β1/2 or β2/2) are different from one another,
wherein in particular the third inclination angle is identical to the first inclination angle and/or the fourth inclination angle is identical to the second inclination angle, or wherein in particular the third inclination angle is different from the first inclination angle and/or the fourth inclination angle is different from the second inclination angle.

4. Method according to one of the preceding claims, in which at least one preliminary-thread flank and/or at least one flank of the thread-forming profile and/or at least one final-thread flank is configured in a linear or straight manner and/or in which at least one preliminary-thread flank and/or at least one flank of the thread-forming profile and/or at least one final-thread flank is configured at least partially in a curved, in particular convexly curved, manner, wherein an inclination angle at a curved flank subregion is defined as an angle between a tangent and the centre line.

5. Method according to one of the preceding claims, in which each centre line is oriented perpendicularly to a thread centre line of the final thread.

6. Method according to one of the preceding claims, in which,
a) in the second work step, the material of the workpiece is pressed in over at least a subregion of at least one of the two preliminary-thread flanks or substantially over the entirety of preliminary-thread flank(s), or
b) in which at least one or both of the final-thread flank(s) is or are formed at least partially or entirely by plastic pressing-in in the second work step.

7. Method according to one of Claims 1 to 5, in which,
a) in the second work step, the material of the workpiece is pressed in substantially only in the region of the preliminary-thread base,
or
b) in which the final-thread base is formed by plastic pressing-in in the second work step.

8. Method according to one of the preceding claims, in which at least one preliminary-thread flank and/or at least one flank of the thread-forming profile is composed in each case of at least two flank subregions which are oriented at different inclination angles to the centre line, wherein, in particular in the case of the preliminary-thread profile and/or in the case of the thread-forming profile, the flank subregions of the flank(s) are produced or configured in each case in a linear manner.

9. Method according to one of the preceding claims, in which,
a) in the second work step, the material of the workpiece is pressed in in each case in at least a first of the differently inclined flank subregions of the preliminary-thread flank(s), and the preliminary-thread flank(s) remain(s) substantially unchanged in at least a second flank subregion, adjoining said first flank subregion,
or in which
b) the final-thread flank(s) is or are formed by plastic pressing-in in at least one first flank subregion in the second work step and is or are produced solely by material removal in a second flank subregion adjoining the first flank subregion in the first work step,
or in which,
c) in the second work step, a final thread having a final-thread profile is produced, at least one of the final-thread flanks of said final-thread profile is constituted by or composed of an outer flank subregion of the preliminary-thread profile and an inner flank subregion of the thread-forming profile, and/or at least one of the final-thread flanks of said final-thread profile being constituted by or composed of an outer flank subregion of the thread-forming profile and an inner flank subregion of the preliminary-thread profile.

10. Method according to Claim 8 or Claim 9, in which the inclination angle of the outer flank subregions of the preliminary-thread profile is identical to the inclination angle of the inner flank subregions of the thread-forming profile.

11. Method according to one of Claims 8 to 10, in which transition points (P1, P2), at which two flank subregions of a flank transition into one another, substantially coincide or lie one above the other or in a common dividing line or at an identical distance from a centre line of the thread in the preliminary-thread profile and thread-forming profile in the second work step, or in which the transition points between the flank subregions of the preliminary-thread profile and thread-forming profile are matched to one another such that each final-thread flank of the final-thread profile is constituted in each case by or results in each case from or is composed in each case of an outer flank subregion of the preliminary-thread profile and an inner flank subregion of the thread-forming profile.

12. Method according to one of the preceding claims, in which, in the second work step, the centre lines (M1, M2) of the preliminary-thread profile and thread-forming profile are brought in congruence, or in which, in the second work step, the centre lines (M1, M2) of the preliminary-thread profile and thread-forming profile are arranged in a manner offset parallel to one another.

## Revendications

1. Procédé pour la réalisation d'un filetage dans une pièce, dans lequel
a) pendant au moins une première étape de travail, un pré-filetage est ou a été réalisé dans la pièce (50) par enlèvement de matière de la pièce ou par usinage par enlèvement de copeaux, le profil (21) de ce pré-filetage comportant deux flancs (21A, 21B) et un fond (21C) reliant les deux flancs,
b) pendant au moins une deuxième étape de travail, un filetage final avec un profil de filetage final (23), comportant de préférence deux flancs (23A, 23B) et un fond (23C) reliant les deux flancs, est réalisé par enfoncement plastique de la matière de la pièce dans au moins une zone partielle du profil du pré-filetage, au moyen d'au moins un profil de formage de filet, qui comporte deux flancs et un fond reliant les deux flancs, selon un volume d'enfoncement (ΔVA, ΔVB, ΔVC) prédéfini ou prédéfinissable,
c) au moins l'un des flancs (21A) du pré-filetage étant incliné dans au moins une zone partielle de flanc (21E, 21F) en formant un premier angle d'inclinaison (α1/2 ou α2/2) avec un axe médian (M1) du profil de pré-filetage, et au moins l'un des flancs (22A) du profil de formage du filet étant incliné dans au moins une zone partielle de flanc (22E, 22F) en formant un deuxième angle d'inclinaison (ß1/2 ou ß2/2) avec un axe médian (M2) du profil de formage du filet, **caractérisé en ce que**
d) le premier angle d'inclinaison (α1/2 ou α2/2) et le deuxième angle d'inclinaison (ß1/2 ou ß2/2) sont différents l'un de l'autre.

2. Procédé selon la revendication 1, dans lequel la matière de la pièce est enfoncée au moins dans la zone partielle du flanc du profil de pré-filtrage, inclinée en formant le premier angle d'inclinaison avec l'axe médian, au moyen d'au moins la zone partielle du flanc du profil de formage du filet, inclinée en formant le deuxième angle d'inclinaison avec l'axe médian.

3. Procédé selon la revendication 1 ou la revendication 2, dans lequel un deuxième des flancs de pré-filtrage (21B) est également incliné dans au moins une zone partielle du flanc (21G, 21H) en formant un troisième angle d'inclinaison (α1/2 ou α2/2) avec l'axe médian, et également un deuxième des flancs (22B) du profil de formage du filet est incliné dans au moins une zone partielle du flanc en formant un quatrième angle d'inclinaison (ß1/2 ou ß2/2) avec l'axe médian (M2), et dans lequel le troisième angle d'inclinaison (α1/2 ou α2/2) et le quatrième angle d'inclinaison (ß1/2 ou ß2/2) sont différents l'un de l'autre,
en particulier le troisième angle d'inclinaison étant égal au premier angle d'inclinaison et/ou le quatrième angle d'inclinaison étant égal au deuxième angle d'inclinaison, ou en particulier le troisième angle d'inclinaison étant différent du premier angle d'inclinaison et/ou le quatrième angle d'inclinaison étant différent du deuxième angle d'inclinaison.

4. Procédé selon l'une quelconque des revendications précédentes, dans lequel au moins un flanc du pré-filtrage et/ou au moins un flanc du profil de formage du filet et/ou au moins un flanc du filetage final sont linéaires ou droits, et/ou dans lequel au moins un flanc du pré-filtrage et/ou au moins un flanc du profil de formage du filet et/ou au moins un flanc du filetage final sont réalisés au moins partiellement avec une courbure, en particulier une courbure convexe, un angle d'inclinaison sur une zone partielle de flanc courbe étant défini comme angle entre une tangente et l'axe médian.

5. Procédé selon l'une quelconque des revendications précédentes, dans lequel chaque axe médian est ou sera orienté perpendiculairement à un axe médian du filetage final.

6. Procédé selon l'une quelconque des revendications précédentes, dans lequel
a) au cours de la deuxième étape de travail, la matière de la pièce est enfoncée sur au moins une zone partielle d'au moins l'un des deux flancs du pré-filtrage ou celle qui s'étend sensiblement sur tout/tous le/les flanc(s) du pré-filtrage, ou
b) dans lequel au moins l'un ou les deux flancs du filetage final sont ou seront formés au moins en partie ou en totalité par un enfoncement plastique au cours de la deuxième étape de travail.

7. Procédé selon l'une quelconque des revendications 1 à 5, dans lequel
a) au cours de la deuxième étape de travail, la matière de la pièce est enfoncée sensiblement seulement dans la zone du fond du pré-filtrage,
ou
b) dans lequel le fond du filetage final est formé par enfoncement plastique au cours de la deuxième étape de travail.

8. Procédé selon l'une quelconque des revendications précédentes, dans lequel au moins un flanc du pré-filtrage et/ou au moins un flanc du profil de formage du filet sont composés respectivement d'au moins deux zones de flanc partiel, qui sont orientés par rapport à l'axe médian en formant des angles d'inclinaison différents,
en particulier dans le profil du pré-filtrage et/ou dans le profil de formage du filet, les zones de flanc partiel des flancs seront ou sont réalisés ou générés chacun sous forme linéaire.

9. Procédé selon l'une quelconque des revendications précédentes, dans lequel
a) au cours de la deuxième étape de travail, la matière de la pièce est enfoncée respectivement dans au moins une première des zones de flanc partiel, inclinées différemment, du/des flanc(s) du pré-filtrage, et le/les pré-filtrage(s) reste ou restent sensiblement inchangé(s) dans au moins une deuxième zone de flanc partiel, adjacente à cette première zone de flanc partiel,
ou dans lequel
b) le/les flanc(s) du filetage final est/sont formé(s) par enfoncement plastique dans au moins une première zone de flanc partiel au cours de la deuxième étape de travail, et est/sont ou sera/seront généré(s) uniquement par enlèvement de matière dans une deuxième zone de flanc partiel, adjacente à la première zone de flanc partiel, au cours de la première étape de travail,
ou dans lequel
c) au cours de la deuxième étape de travail est généré un filetage final avec un profil de filetage final, dans lequel au moins l'un des flancs de ce filetage final est constitué ou composé d'une zone extérieure de flanc partiel du profil de pré-filtrage et d'une zone intérieure de flanc partiel du profil de formage du filet, et/ou au moins l'un des flancs de ce filetage final est constitué ou composé d'une zone extérieure de flanc partiel du profil de formage du filet et d'une zone intérieure de flanc partiel du profil de pré-filtrage.

10. Procédé selon la revendication 8 ou la revendication 9, dans lequel l'angle d'inclinaison des zones extérieures de flanc partiel du profil du pré-filtrage est égal à l'angle d'inclinaison des zones intérieures de flanc partiel du profil de formage du filet.

11. Procédé selon l'une quelconque des revendications 8 à 10, dans lequel, au cours de la deuxième étape de travail, sur un profil de pré-filtrage et un profil de formage du filet, des points de transition (P1, P2), dans lesquels deux zones de flanc partiel d'un flanc se prolongent l'une dans l'autre, coïncident sensiblement ou se situent l'un au-dessus de l'autre ou dans une ligne de séparation commune ou à la même distance d'un axe médian du filetage, ou dans lequel les points de transition entre les zones de flanc partiel du profil de pré-filtrage et du profil de formage du filet sont ajustés l'un à l'autre de telle sorte que chaque flanc de filetage final du profil de filetage final constitue ou résulte ou se compose respectivement d'une zone extérieure de flanc partiel du profil de pré-filtrage et d'une zone intérieure de flanc partiel du profil de formage du filet.

12. Procédé selon l'une quelconque des revendications précédentes, dans lequel au cours de la deuxième étape de travail, les axes médians (M1, M2) du profil de pré-filtrage et du profil de formage du filet sont amenés en recouvrement ou dans lequel, au cours de la deuxième étape de travail, les axes médians (M1, M2) du profil de pré-filtrage et du profil de formage du filet sont disposés en étant décalés parallèlement l'un à l'autre.
